# EUROPEAN PATENT APPLICATION

(11) **EP 4 475 590 A1**
(43) Date of publication of application: **11.12.2024**
(21) Application number: 23769531.7
(22) Date of filing: 22.02.2023
(51) Int. Cl.: H04W 28/02, H04W 28/24

(54) **COMMUNICATION METHOD AND APPARATUS**

(30) Priority: 18.03.2022 CN 202210271709
(71) Applicant: Huawei Technologies Co., Ltd., Shenzhen, Guangdong 518129 (CN)
(72) Inventor: SUN, Haiyang, Shenzhen, Guangdong 518129 (CN); YU, Fang, Shenzhen, Guangdong 518129 (CN); LI, Yan, Shenzhen, Guangdong 518129 (CN)
(74) Representative: Isarpatent
(86) International application number: PCT/CN2023/077624
(87) International publication number: WO 2023/174023

(57) **Abstract**

This application relates to a communication method and apparatus. A first access network device determines first expected assistance information and second expected assistance information based on matching information between a first QoS flow and a second QoS flow, where the first expected assistance information indicates an expected transmission occasion of the first QoS flow, and the second expected assistance information indicates an expected transmission occasion of the second QoS flow. The first access network device sends the first expected assistance information and the second expected assistance information to a first core network device, where the first expected assistance information and the second expected assistance information are used to re-determine transmission occasions of the first QoS flow and the second QoS flow. In embodiments of this application, resources of associated QoS flows may be coordinated, to avoid, as much as possible, a case in which a resource scheduled for a QoS flow does not match a resource scheduled for another QoS flow, and reduce a transmission delay of the QoS flow.

## Description

### CROSS-REFERENCE TO RELATED APPLICATIONS

This application claims priority to Chinese Patent Application No. 202210271709.X, filed with the China National Intellectual Property Administration on March 18, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a radio access network (radio access network, RAN) may obtain, from a core network, time at which a service flow arrives at an ingress of the RAN, so that the RAN can schedule, based on the time at which the service flow arrives at the RAN, a resource for a quality of service (quality of service, QoS) flow (flow) used to transmit the service flow.

In a scenario in which two user equipments (user equipments, UEs) communicate, for example, a UE 1 communicates with a UE 2, bidirectional service flows may be involved. For example, the UE 1 sends a service flow to the UE 2, and the UE 2 also sends a service flow to the UE 1. However, how the RAN schedules resources for bidirectional QoS flows used to transmit the bidirectional service flow is a problem that needs to be resolved.

### SUMMARY

Embodiments of this application provide a communication method and apparatus, to schedule proper resources for matching QoS flows.

According to a first aspect, a first communication method is provided. The method may be performed by a first access network device, may be performed by another device including a function of the first access network device, or may be performed by a chip system or another functional module. The chip system or the functional module can implement the function of the first access network device. The chip system or the functional module is, for example, disposed in the first access network device. Optionally, the first access network device is, for example, a base station. The method includes: determining first expected assistance information and second expected assistance information based on matching information between a first QoS flow and a second QoS flow, where the first expected assistance information indicates an expected transmission occasion of the first QoS flow, the second expected assistance information indicates an expected transmission occasion of the second QoS flow, and the matching information indicates that the first QoS flow matches the second QoS flow, or indicates that the first QoS flow and the second QoS flow are used to transmit a same service flow; and sending the first expected assistance information and the second expected assistance information to a first core network device, where the first expected assistance information and the second expected assistance information are used to re-determine transmission occasions of the first QoS flow and the second QoS flow.

In this embodiment of this application, service flows transmitted by using the first QoS flow and the second QoS flow, for example, belong to a same service flow. Therefore, it is considered that the first QoS flow matches the second QoS flow. For example, the first QoS flow and the second QoS flow are two QoS flows transmitted through communication between two terminal devices. For example, communication between the two terminal devices is forwarded via the first access network device. In this case, time at which the two QoS flows arrive at the first access network device or the terminal devices is associated. When time at which one of the QoS flows arrives at the first access network device is relatively determined, if the first access network device schedules any resource for the other QoS flow, time corresponding to the scheduled resource in time domain may be different from time at which the other QoS flow arrives at the terminal device. Therefore, in this embodiment of this application, the first access network device may determine the first expected assistance information and the second expected assistance information when considering that the two QoS flows match. In this case, the transmission occasion of the first QoS flow indicated by the first expected assistance information may be associated with the transmission occasion of the second QoS flow indicated by the second expected assistance information. The core network device may determine the transmission occasion of the first QoS flow and the transmission occasion of the second QoS flow based on this. In this case, the finally determined transmission occasion of the first QoS flow is also associated with the finally determined transmission occasion of the second QoS flow. If the first access network device schedules resources for the first QoS flow and the second QoS flow based on this, the scheduled resources can meet the time at which the two QoS flows arrive at the first access network device or the terminal devices, so that the two QoS flows can be properly transmitted. According to the method provided in this embodiment of this application, resources of associated QoS flows may be coordinated, to avoid, as much as possible, a case in which a resource scheduled for a QoS flow does not match a resource scheduled for another QoS flow, and reduce a transmission delay of the QoS flow.

In an optional implementation, the determining first expected assistance information includes: when a first scheduling resource determined based on an estimated transmission occasion of the first QoS flow conflicts with another scheduling resource, determining the first expected assistance information based on a time domain location of a second scheduling resource, where the second scheduling resource does not conflict with the another scheduling resource. For example, the first access network device may determine the estimated transmission occasion of the first QoS flow based on the assistance information from the first core network device, and may determine the first scheduling resource based on the estimated transmission occasion of the first QoS flow. If the first scheduling resource conflicts with the another scheduling resource, the transmission occasion of the first QoS flow needs to be re-determined; otherwise, a conflict may occur between transmission of the first QoS flow and transmission of another QoS flow. In this case, the first access network device may determine the second scheduling resource that does not conflict with the another scheduling resource, so that the first expected assistance information can be determined based on the time domain location of the second scheduling resource. The expected assistance information is determined in this manner, so that a resource conflict can be reduced, and a transmission delay of the QoS flow can also be reduced.

In an optional implementation, the determining first expected assistance information and second expected assistance information based on matching information between a first QoS flow and a second QoS flow includes: if the transmission occasion of the first QoS flow indicated by the first expected assistance information has a first offset relative to the estimated transmission occasion of the first QoS flow, the transmission occasion of the second QoS flow indicated by the second expected assistance information has the first offset relative to an estimated transmission occasion of the second QoS flow. The first QoS flow and the second QoS flow are service flows for communication between two terminal devices. Therefore, transmission occasions of the two service flows are associated. For example, a first service flow transmitted by using the first QoS flow is an uplink service flow, and a service flow transmitted by using the second QoS flow is a downlink service flow. If time at which the first QoS flow arrives at the terminal device has the first offset, time at which the second QoS flow arrives at an access network device (for example, the first access network device) should also have the first offset; otherwise, a determined transmission occasion may be inconsistent with an actual transmission occasion of the QoS flow.

In an optional implementation, the method further includes: receiving the matching information from the first core network device. The matching information between the first QoS flow and the second QoS flow is, for example, from the first core network device, and the first core network device is, for example, an SMF.

In an optional implementation, the matching information includes access network tunnel information corresponding to a first PDU session and an identifier of the first QoS flow, and includes access network tunnel information corresponding to a second PDU session and an identifier of the second QoS flow; the matching information includes core network tunnel information corresponding to a first PDU session and an identifier of the first QoS flow, and includes core network tunnel information corresponding to a second PDU session and an identifier of the second QoS flow; or the matching information includes an identifier of a first PDU session and an identifier of the first QoS flow, and includes an identifier of a second PDU session and an identifier of the second QoS flow. The first PDU session is a session in which the first QoS flow is located, and the second PDU session is a session in which the second QoS flow is located. The foregoing descriptions are some examples of the matching information. In addition, the matching information may further include other content, provided that the matching information can indicate that the first QoS flow matches (or is associated with) the second QoS flow.

In an optional implementation, after the sending the first expected assistance information and the second expected assistance information to a first core network device, the method further includes: receiving first assistance information and second assistance information from the first core network device, where the first assistance information indicates the transmission occasion of the first QoS flow, the second assistance information indicates the transmission occasion of the second QoS flow, a scheduling resource determined based on the first assistance information does not conflict with another scheduling resource, and scheduling determined based on the second assistance information does not conflict with the another scheduling resource. After the first access network device sends the first expected assistance information and the second expected assistance information to a core network, the core network may re-determine transmission occasions of the first QoS flow and the second QoS flow, and indicate the re-determined transmission occasions to the first access network device. The first access network device may determine the scheduling resource of the first QoS flow based on the first assistance information, and determine the scheduling resource of the second QoS flow based on the second assistance information. The first assistance information and the second assistance information are determined, for example, based on the first expected assistance information and the second expected assistance information. Therefore, there is no conflict between the scheduling resources determined by the first access network device and another scheduling resource, to ensure normal transmission of the first QoS flow and the second QoS flow.

In an optional implementation, the first expected assistance information includes expected burst arrival time of the first QoS flow; the first expected assistance information includes range information of expected burst arrival time of the first QoS flow; the first expected assistance information includes an offset of expected burst arrival time of the first QoS flow; or the first expected assistance information includes range information of an offset of expected burst arrival time of the first QoS flow. The offset of the expected burst arrival time of the first QoS flow is an offset between the expected burst arrival time of the first QoS flow and estimated burst arrival time of the first QoS flow. Content included in the second expected assistance information, the first assistance information, the second assistance information, and the like is also similar to that included in the first expected assistance information, and details are not described again.

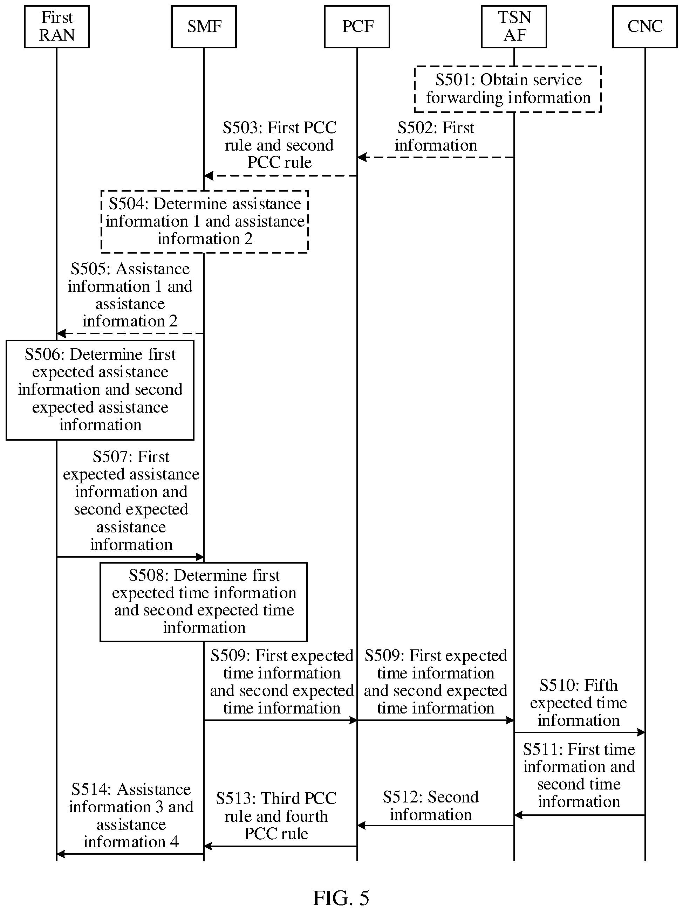

Optionally, for the method described in the first aspect, refer to the embodiment shown in FIG. 5 to be described below.

According to a second aspect, a second communication method is provided. The method may be performed by a first core network device, may be performed by another device including a function of the first core network device, or may be performed by a chip system or another functional module. The chip system or the functional module can implement the function of the first core network device. The chip system or the functional module is, for example, disposed in the first core network device. Optionally, the first core network device is, for example, an SMF. The method includes: receiving first expected assistance information and second expected assistance information, where the first expected assistance information indicates an expected transmission occasion of a first QoS flow, the second expected assistance information indicates an expected transmission occasion of a second QoS flow, and the first QoS flow and the second QoS flow are used to transmit a same service flow; determining first expected time information and second expected time information based on third expected assistance information and fourth expected assistance information, where the first expected time information indicates an expected transmission occasion of a first service flow, the second expected time information indicates an expected transmission occasion of a second service flow, the third expected assistance information is associated with at least one of the first expected assistance information and the second expected assistance information, the fourth expected assistance information is associated with at least one of the first expected assistance information and the second expected assistance information, the first service flow is transmitted by using the first QoS flow, and the second service flow is transmitted by using the second QoS flow; and sending the first expected time information and the second expected time information to a second core network device, to re-determine transmission occasions of the first service flow and the second service flow.

In an optional implementation, the third expected assistance information is the first expected assistance information, and the fourth expected assistance information is the second expected assistance information.

In an optional implementation, the method further includes: sending matching information to a first access network device, where the first access network device is configured to transmit the first QoS flow and the second QoS flow, and the matching information indicates that the first QoS flow matches the second QoS flow, or indicates that the first QoS flow and the second QoS flow are used to transmit the same service flow. If the first access network device is configured to transmit the first QoS flow and the second QoS flow, the first core network device may send the matching information to the first access network device, so that the first access network device determines that the first QoS flow matches the second QoS flow. In this way, if the first access network device needs to re-determine transmission occasions (expected assistance information) for two QoS flows, the first access network device may comprehensively determine the expected assistance information of the two QoS flows based on a matching status of the two QoS flows, so that the determined transmission occasions of the two QoS flows can meet actual transmission statuses of the QoS flows.

In an optional implementation, the method further includes: if time indicated by the first expected assistance information does not match time indicated by the second expected assistance information, determining the third expected assistance information and the fourth expected assistance information based on the first expected assistance information and the second expected assistance information, where transmission occasions indicated by the third expected assistance information and the fourth expected assistance information have a same offset relative to estimated transmission occasions of corresponding QoS flows. For example, if the time indicated by the first expected assistance information and the time indicated by the second expected assistance information have different offsets relative to respective estimated transmission occasions, it is considered that the time indicated by the first expected assistance information does not match the time indicated by the second expected assistance information. In this case, the first core network device may re-determine the expected transmission occasions of the first QoS flow and the second QoS flow. In other words, the first core network device may determine the third expected assistance information and the fourth expected assistance information, and time indicated by the third expected assistance information matches time indicated by the fourth expected assistance information, to meet actual transmission statuses of the QoS flows.

In an optional implementation, the method further includes: sending the third expected assistance information to a first access network device, and sending the fourth expected assistance information to a second access network device, where the third expected assistance information indicates an expected transmission occasion of the first QoS flow, and the fourth expected assistance information indicates an expected transmission occasion of the second QoS flow; and receiving first acknowledgment information from the first access network device, and receiving second acknowledgment information from the second access network device, where the first acknowledgment information indicates that the third expected assistance information is accepted, and the second acknowledgment information indicates that the fourth expected assistance information is accepted. If the first core network device determines the third expected assistance information and the fourth expected assistance information, the first core network device may negotiate with a corresponding access network device, to determine whether the access network device can receive the third expected assistance information and the fourth expected assistance information. The first core network device negotiates with the access network device, the first core network device may be dominant, and the access network device is more inclined to accept a suggestion of the first core network device. Therefore, negotiation steps can be reduced, thereby improving negotiation efficiency.

In an optional implementation, the method further includes: sending information about the second QoS flow to the first access network device, and sending information about the first QoS flow to the second access network device. If two QoS flows are transmitted by two access network devices, the first core network device may separately negotiate with the two access network devices, to determine the expected assistance information of the corresponding QoS flows, or the two access network devices may negotiate with each other to determine the expected assistance information of the two QoS flows. If the two access network devices negotiate with each other, the first core network device may send information about a corresponding QoS flow to an access network device that is not used to transmit the QoS flow, so that the access network device determines that the QoS flow matches a QoS flow transmitted by the access network device, and the two access network devices can negotiate the expected assistance information of the two QoS flows based on a matching relationship between the two QoS flows.

In an optional implementation, the method further includes: determining the matching information between the first QoS flow and the second QoS flow, where the matching information indicates that the first QoS flow matches the second QoS flow, or indicates that the first QoS flow and the second QoS flow are used to transmit the same service flow. The first core network device may determine that the first QoS flow matches the second QoS flow, so that the expected assistance information of the two QoS flows can be comprehensively determined based on the matching information.

In an optional implementation, the method further includes: receiving association information from the second core network device, where the association information indicates that a first terminal device is associated with a second terminal device, the matching information is determined based on the association information, the first terminal device corresponds to the first service flow, and the second terminal device corresponds to the second service flow. For example, the first core network device may determine the matching information based on an association relationship from the second core network device, or the first core network device may determine the matching information in another manner.

In an optional implementation, the association information includes information about an association relationship between an identifier of the first terminal device and an identifier of the second terminal device; the association information includes address information of the first terminal device and address information of the second terminal device; or the association information includes information about an association relationship between the first service flow and the second service flow.

In an optional implementation, the matching information includes access network tunnel information corresponding to a first PDU session and an identifier of the first QoS flow, and includes access network tunnel information corresponding to a second PDU session and an identifier of the second QoS flow; the matching information includes core network tunnel information corresponding to a first PDU session and an identifier of the first QoS flow, and includes core network tunnel information corresponding to a second PDU session and an identifier of the second QoS flow; or the matching information includes an identifier of a first PDU session and an identifier of the first QoS flow, and includes an identifier of a second PDU session and an identifier of the second QoS flow. The first PDU session is a session in which the first QoS flow is located, and the second PDU session is a session in which the second QoS flow is located.

In an optional implementation, the first expected assistance information includes expected burst arrival time of the first QoS flow; the first expected assistance information includes range information of expected burst arrival time of the first QoS flow; the first expected assistance information includes an offset of expected burst arrival time of the first QoS flow; or the first expected assistance information includes range information of an offset of expected burst arrival time of the first QoS flow. The offset of the expected burst arrival time of the first QoS flow is an offset between the expected burst arrival time of the first QoS flow and estimated burst arrival time of the first QoS flow.

For technical effects of the second aspect or the implementations, refer to the descriptions of the technical effects of the first aspect or the corresponding implementations.

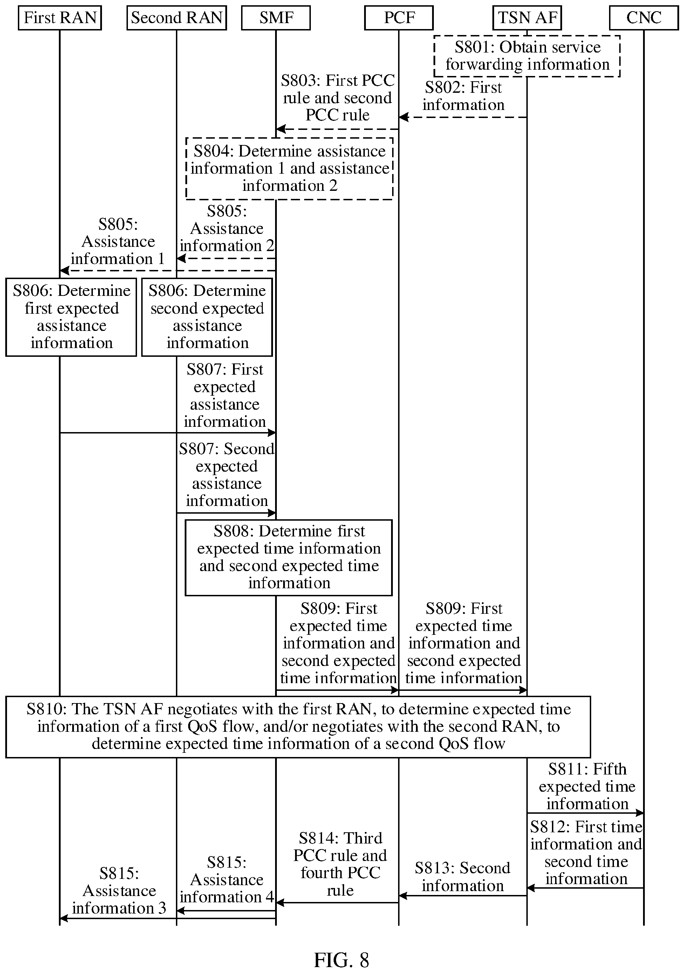

Optionally, for the method described in the second aspect, refer to any one of the embodiment shown in FIG. 5 to the embodiment shown in FIG. 8 to be described below.

According to a third aspect, a third communication method is provided. The method may be performed by a second core network device, may be performed by another device including a function of the second core network device, or may be performed by a chip system or another functional module. The chip system or the functional module can implement the function of the second core network device. The chip system or the functional module is, for example, disposed in the second core network device. Optionally, the second core network device is, for example, a TSN AF or a TSCTSF. The method includes: receiving first expected time information and second expected time information from a first core network device, where the first expected time information indicates an expected transmission occasion of a first service flow, the second expected time information indicates an expected transmission occasion of a second service flow, and the first service flow and the second service flow belong to a same service flow; determining third expected time information and fourth expected time information based on the first expected time information and the second expected time information, where the third expected time information indicates burst arrival time of the first service flow, and the fourth expected time information indicates burst arrival time of the second service flow; and sending the third expected time information and the fourth expected time information to the first core network device.

In an optional implementation, the method further includes: sending association information to the first core network device, where the association information indicates that a first terminal device is associated with a second terminal device, the first terminal device corresponds to the first service flow, and the second terminal device corresponds to the second service flow.

In an optional implementation, the association information includes information about an association relationship between an identifier of the first terminal device and an identifier of the second terminal device; the association information includes address information of the first terminal device and address information of the second terminal device; or the association information includes information about an association relationship between the first service flow and the second service flow.

In an optional implementation, the determining third expected time information and fourth expected time information based on the first expected time information and the second expected time information includes: if time indicated by the first expected time information does not match time indicated by the second expected time information, determining the third expected time information and the fourth expected time information based on the first expected time information and the second expected time information, where transmission occasions indicated by the third expected time information and the fourth expected time information have a same offset relative to estimated transmission occasions of corresponding QoS flows. For example, if the time indicated by the first expected time information and the time indicated by the second expected time information have different offsets relative to respective estimated transmission occasions, it is considered that the time indicated by the first expected time information does not match the time indicated by the second expected time information. In this case, the second core network device may re-determine expected transmission occasions of a first QoS flow and a second QoS flow. In other words, the second core network device may determine the third expected time information and the fourth expected time information, and time indicated by the third expected time information matches time indicated by the fourth expected time information, to meet actual transmission statuses of the QoS flows.

In an optional implementation, the method further includes: sending the third expected time information to a first access network device, and sending the fourth expected time information to a second access network device, where the third expected time information indicates an expected transmission occasion of a first QoS flow, and the fourth expected time information indicates an expected transmission occasion of a second QoS flow; and receiving third acknowledgment information from the first access network device, and receiving fourth acknowledgment information from the second access network device, where the third acknowledgment information indicates that the third expected time information is accepted, and the fourth acknowledgment information indicates that the fourth expected time information is accepted. If the first core network device determines the third expected time information and the fourth expected time information, the second core network device may negotiate with a corresponding access network device, to determine whether the access network device can receive the third expected time information and the fourth expected time information. The second core network device negotiates with the access network device, the second core network device may be dominant, and the access network device is more inclined to accept a suggestion of the second core network device. Therefore, negotiation steps can be reduced, thereby improving negotiation efficiency.

For technical effects of the third aspect or the implementations, refer to the descriptions of the technical effects of the first aspect or the corresponding implementations, and/or refer to the descriptions of the technical effects of the second aspect or the corresponding implementations.

Optionally, for the method described in the third aspect, refer to any one of the embodiment shown in FIG. 5 to the embodiment shown in FIG. 8 to be described below.

According to a fourth aspect, a fourth communication method is provided. The method may be performed by a first access network device, may be performed by another device including a function of the first access network device, or may be performed by a chip system or another functional module. The chip system or the functional module can implement the function of the first access network device. The chip system or the functional module is, for example, disposed in the first access network device. Optionally, the first access network device is, for example, a base station. The method includes: sending expected assistance information to a second access network device, where the expected assistance information includes expected assistance information indicating an expected transmission occasion of a first QoS flow, or includes the expected assistance information indicating the expected transmission occasion of the first QoS flow and expected assistance information indicating an expected transmission occasion of a second QoS flow, the first QoS flow matches the second QoS flow or the first QoS flow and the second QoS flow are used to transmit a same service flow, the first QoS flow is transmitted by the first access network device, and the second QoS flow is transmitted by the second access network device; receiving acknowledgment information from the second access network device, where the acknowledgment information indicates that the expected assistance information is accepted; and sending the expected assistance information to a first core network device.

In an optional implementation, the method further includes: receiving, from the first core network device, assistance information indicating a transmission occasion of the first QoS flow and information about the second QoS flow; and determining the expected assistance information based on the assistance information and the information about the second QoS flow.

In an optional implementation, the method further includes: based on the information about the second QoS flow, determining that the first QoS flow matches the second QoS flow, or determining that the first QoS flow and the second QoS flow are used to transmit the same service flow.

In an optional implementation, the determining the expected assistance information based on the assistance information and the information about the second QoS flow includes: when a scheduling resource determined based on the assistance information conflicts with another scheduling resource, determining, based on a time domain location of a scheduling resource that does not conflict with the scheduling resource, the expected assistance information indicating the expected transmission occasion of the first QoS flow; and determining, based on the information about the second QoS flow and the expected assistance information indicating the expected transmission occasion of the first QoS flow, the expected assistance information indicating the expected transmission occasion of the second QoS flow, where the transmission occasions indicated by the expected assistance information indicating the expected transmission occasion of the first QoS flow and the expected assistance information indicating the expected transmission occasion of the second QoS flow have a same offset relative to estimated transmission occasions of the corresponding QoS flows.

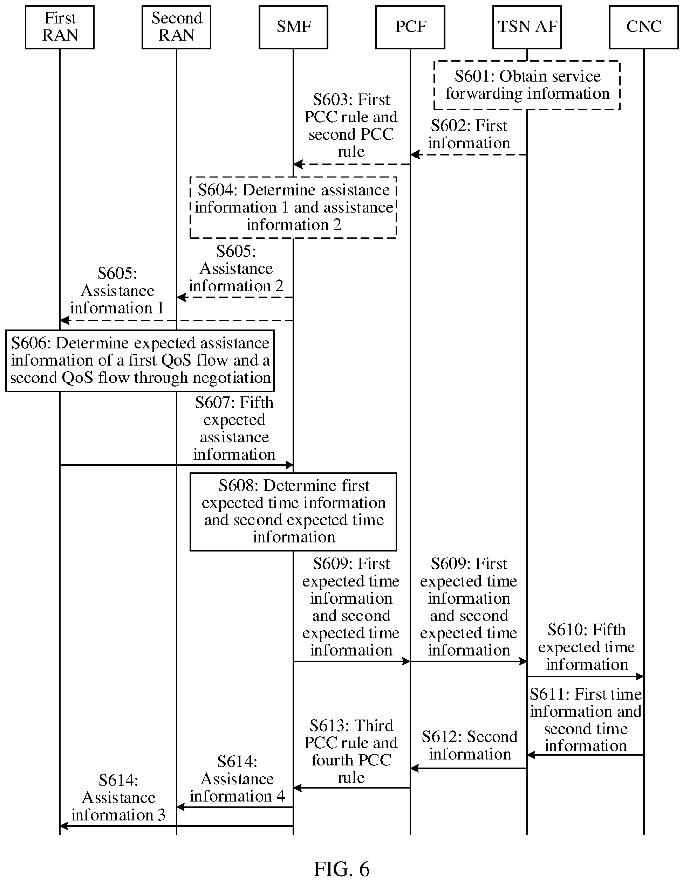

Optionally, for the method described in the fourth aspect, refer to the embodiment shown in FIG. 6 to be described below.

For technical effects of the fourth aspect or the implementations, refer to one or more of the following: the descriptions of the technical effects of the first aspect or the corresponding implementations, the descriptions of the technical effects of the second aspect or the corresponding implementations, or the descriptions of the technical effects of the third aspect or the corresponding implementations.

According to a fifth aspect, a communication apparatus is provided. The communication apparatus may be the first access network device according to any one of the first aspect to the fourth aspect. The communication apparatus has a function of the first access network device. The communication apparatus is, for example, the first access network device, a large device including the first access network device, or a functional module in the first access network device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

For example, the processing unit is configured to determine first expected assistance information and second expected assistance information based on matching information between a first QoS flow and a second QoS flow, where the first expected assistance information indicates an expected transmission occasion of the first QoS flow, the second expected assistance information indicates an expected transmission occasion of the second QoS flow, and the matching information indicates that the first QoS flow matches the second QoS flow, or indicates that the first QoS flow and the second QoS flow are used to transmit a same service flow. The transceiver unit (or the sending unit) is configured to send the first expected assistance information and the second expected assistance information to a first core network device, where the first expected assistance information and the second expected assistance information are used to re-determine transmission occasions of the first QoS flow and the second QoS flow.

For another example, the transceiver unit (or the sending unit) is configured to send expected assistance information to a second access network device, where the expected assistance information includes expected assistance information indicating an expected transmission occasion of a first QoS flow, or includes the expected assistance information indicating the expected transmission occasion of the first QoS flow and expected assistance information indicating an expected transmission occasion of a second QoS flow, the first QoS flow matches the second QoS flow or the first QoS flow and the second QoS flow are used to transmit a same service flow, the first QoS flow is transmitted by the first access network device, and the second QoS flow is transmitted by the second access network device. The transceiver unit (or the receiving unit) is further configured to receive acknowledgment information from the second access network device, where the acknowledgment information indicates that the expected assistance information is accepted. The transceiver unit (or the sending unit) is further configured to send the expected assistance information to a first core network device.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the first access network device according to any one of the first aspect to the fourth aspect.

According to a sixth aspect, a communication apparatus is provided. The communication apparatus may be the first core network device according to any one of the first aspect to the fourth aspect. The communication apparatus has a function of the first core network device. The communication apparatus is, for example, the first core network device, a large device including the first core network device, or a functional module in the first core network device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions of the fifth aspect.

For example, the transceiver unit (or the receiving unit) is configured to receive first expected assistance information and second expected assistance information, where the first expected assistance information indicates an expected transmission occasion of a first QoS flow, the second expected assistance information indicates an expected transmission occasion of a second QoS flow, and the first QoS flow and the second QoS flow are used to transmit a same service flow. The processing unit is configured to determine first expected time information and second expected time information based on third expected assistance information and fourth expected assistance information, where the first expected time information indicates an expected transmission occasion of a first service flow, the second expected time information indicates an expected transmission occasion of a second service flow, the third expected assistance information is associated with at least one of the first expected assistance information and the second expected assistance information, the fourth expected assistance information is associated with at least one of the first expected assistance information and the second expected assistance information, the first service flow is transmitted by using the first QoS flow, and the second service flow is transmitted by using the second QoS flow. The transceiver unit (or the sending unit) is further configured to send the first expected time information and the second expected time information to a second core network device, to re-determine transmission occasions of the first service flow and the second service flow.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the first core network device according to any one of the first aspect to the fourth aspect.

According to a seventh aspect, a communication apparatus is provided. The communication apparatus may be the second core network device according to any one of the first aspect to the fourth aspect. The communication apparatus has a function of the second core network device. The communication apparatus is, for example, the second core network device, a large device including the second core network device, or a functional module in the second core network device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions of the fifth aspect.

For example, the transceiver unit (or the receiving unit) is configured to receive first expected time information and second expected time information from a first core network device, where the first expected time information indicates an expected transmission occasion of a first service flow, the second expected time information indicates an expected transmission occasion of a second service flow, and the first service flow and the second service flow belong to a same service flow. The processing unit is configured to determine third expected time information and fourth expected time information based on the first expected time information and the second expected time information, where the third expected time information indicates burst arrival time of the first service flow, and the fourth expected time information indicates burst arrival time of the second service flow. The transceiver unit (or the sending unit) is further configured to send the third expected time information and the fourth expected time information to the first core network device.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the second core network device according to any one of the first aspect to the fourth aspect.

According to an eighth aspect, a communication system is provided, and includes the communication apparatus according to the fifth aspect, the communication apparatus according to the sixth aspect, and the communication apparatus according to the seventh aspect.

According to a ninth aspect, a computer-readable storage medium is provided. The computer-readable storage medium is configured to store a computer program or instructions, and when the computer program or the instructions are run, the method performed by the first access network device, the first core network device, or the second core network device in each of the foregoing aspects is implemented.

According to a tenth aspect, a computer program product including instructions is provided. When the computer program product runs on a computer, the method in each of the foregoing aspects is implemented.

According to an eleventh aspect, a chip system is provided, and includes a processor and an interface. The processor is configured to: invoke instructions from the interface and run the instructions, so that the chip system implements the method in each of the foregoing aspects.

### BRIEF DESCRIPTION OF DRAWINGS

FIG. 1 is an architectural diagram of a 5G network;
FIG. 2 is an architectural diagram of interworking between a 5G network and a TSN;
FIG. 3 is an architectural diagram of a 5G network that can support a TSC service;
FIG. 4A is a diagram of downlink burst arrival time;
FIG. 4B is a diagram of uplink burst arrival time;
FIG. 4C is a diagram of communication between two UEs in a single-RAN scenario;
FIG. 4D is a diagram of communication between two UEs in a multi-RAN scenario;
FIG. 4E is a diagram of a relationship between a periodicity of a resource scheduled by a RAN and a periodicity of a QoS flow;
FIG. 5 to FIG. 8 are flowcharts of several communication methods according to embodiments of this application;
FIG. 9 is a diagram of an apparatus according to an embodiment of this application; and
FIG. 10 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms or concepts in embodiments of this application, to facilitate understanding of a person skilled in the art.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, first request information and second request information may be same information, or may be different information. In addition, the names do not indicate that the two pieces of information are different in terms of content, sizes, transmitting ends and/or receiving ends, sending time, priorities, importance degrees, or the like. In addition, step numbers in embodiments described in this application are merely used to distinguish between different steps, but are not used to limit a sequence of the steps. For example, S301 may be performed before S302, may be performed after S302, or may be performed at the same time with S302.

In embodiments of this application, a network device may include an access network device or a core network device. A communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application. In addition, a communication apparatus configured to implement a function of a terminal device may be a terminal device, or may be an apparatus, for example, a chip system, that can support the terminal device in implementing the function. The apparatus may be installed in the terminal device. In the technical solutions provided in embodiments of this application, an example in which the apparatus configured to implement the function of the terminal device is the terminal device is used for describing the technical solutions provided in embodiments of this application.

Embodiments of this application relate to two scenarios. One is an interworking scenario between a mobile communication system and a delay-sensitive network (time-sensitive network, TSN), and the other is a scenario in which a mobile communication system supports a delay-sensitive communication (time-sensitive communication, TSC) service. The following separately describes a 5G communication system and the TSN network by using an example in which the mobile communication system is a 5th generation (5th generation, 5G) mobile communication system.

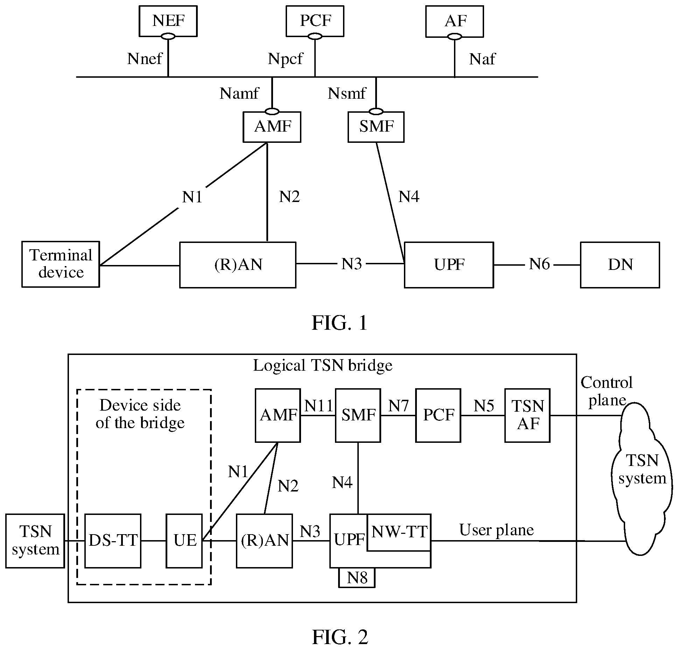

FIG. 1 shows an architecture of the 5G communication system. The architecture of the communication system may include a (radio) access network (a (R)AN in FIG. 1), a terminal device, and a core network. For example, in the architecture of the communication system, the (radio) access network may include an access network device.

In embodiments of this application, the terminal device is a device with a wireless transceiver function, and may be a fixed device, a mobile device, a handheld device (for example, a mobile phone), a wearable device, a vehicle-mounted device, or a built-in wireless apparatus (for example, a communication module, a modem, or a chip system) of the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), telemedicine (telemedicine), a smart grid (smart grid), smart furniture, a smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. For ease of description, in embodiments of this application, an example in which the terminal device is the UE is used for description.

The access network device is a device with a wireless transceiver function, and is configured to communicate with the terminal device. The access network device includes but is not limited to a base station (base transceiver station (base transceiver station, BTS), a NodeB, an eNodeB/eNB, or a gNodeB/gNB), a transmission reception point (transmission reception point, TRP), a subsequently evolved base station of the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. For example, an access network device in a vehicle-to-everything (vehicle-to-everything, V2X) technology may be a roadside unit (roadside unit, RSU). The following uses an example in which the access network device is the base station for description. The base station may communicate with the terminal device, or may communicate with the terminal device via the relay station. The terminal device may communicate with a plurality of base stations in different access technologies.

The core network includes but is not limited to devices configured to implement functions such as mobility management, data processing, session management, and policy and charging control. The 5G system is used as an example. The core network device may include a network exposure function (network exposure function, NEF) network element, a policy control function (policy control function, PCF) network element, a unified data management (unified data management, UDM) network element, an application function (application function, AF) network element, an access and mobility management function (access and mobility management function, AMF) network element, a session management function (session management function, SMF) network element, a user plane function (user plane function, UPF) network element, and the like.

The session management function network element may be configured to be responsible for at least one of session management (including session establishment, modification, or release, and tunnel maintenance between the user plane function network element and the access network device) of the terminal device, selection or reselection of the user plane function network element, UE internet protocol (internet protocol, IP) address allocation (including optional authorization), a traffic steering configuration at the user plane function network element, quality of service (quality of service, QoS) control, and the like. The session management function network element is a termination point of a session management part of a non-access stratum (non-access stratum, NAS) message. For example, in the 5G communication system, the session management function network element may be an SMF network element, as shown in FIG. 1. In a future communication system such as a 6G communication system, the session management function network element may still be an SMF network element, or may have another name. This is not limited in embodiments of this application. When the session management function network element is the SMF network element, the SMF network element may provide an Nsmf service.

The policy control function network element mainly supports providing a unified policy framework to control network behaviors and providing a policy rule for a network function at a control layer, and is responsible for obtaining user subscription information relevant for policy decisions. For example, in the 5G communication system, the policy control function network element may be a PCF network element, as shown in FIG. 1. In future communication, for example, in the 6G communication system, the policy control function network element may still be a PCF network element, or may have another name. This is not limited in embodiments of this application. If the policy control function network element is the PCF network element, the PCF network element may provide an Npcf service.

The access and mobility management function network element may be configured to manage access control and mobility of the UE. During actual application, the access and mobility management function network element includes a mobility management function in a mobility management entity (mobility management entity, MME) in a long term evolution (long term evolution, LTE) network framework, and an access management function is added. The access and mobility management function network element may be specifically responsible for UE registration, mobility management, a tracking area update procedure, reachability detection, SMF network element selection, mobility state transition management, and the like. For example, in the 5G system, the access and mobility management function network element may be an AMF network element, as shown in FIG. 1. In the future communication system such as the 6G system, the access and mobility management function network element may still be an AMF network element, or may have another name. This is not limited in embodiments of this application. When the access and mobility management function network element is the AMF network element, the AMF network element may provide an Namf service. In embodiments of this application, communication between the (R)AN network element and the SMF network element may be forwarded via the AMF network element.

The user plane function network element is responsible for forwarding and receiving user data of the UE. The UPF network element may receive user data from a data network, and send the user data to the UE via the access network device; or the UPF network element may receive user data from the UE via the access network device, and forward the received user data to a data network. For example, in the 5G system, the user plane function network element may be a UPF network element, as shown in FIG. 1. In the future communication system such as the 6G system, the user plane function network element may still be a UPF network element, or may have another name. This is not limited in embodiments of this application.

The network exposure function network element can expose capabilities of the network elements, and translate internal and external information of the 5G communication system, and is generally used in an edge computing scenario. For example, in the 5G system, the network exposure function network element may be an NEF network element, as shown in FIG. 1. In the future communication system such as the 6G system, the network exposure function network element may still be an NEF network element, or may have another name. This is not limited in embodiments of this application.

The data network (data network, DN) is a service network that provides a data transmission service for a user, for example, an IP multimedia service (IP multimedia service, IMS) or the internet (Internet).

Each network element in the core network may also be referred to as a functional entity or device, and may be a network element implemented on dedicated hardware, a software instance running on dedicated hardware, or an instance of a virtualized function on an appropriate platform. For example, the virtualization platform may be a cloud platform.

The AMF network element may be connected to the access network device through an N2 interface, the access network device may be connected to the UPF network element through an N3 interface, the SMF network element may be connected to the UPF network element through an N4 interface, the AMF network element may be connected to the UE through an N1 interface, and the UPF may be connected to the DN through an N6 interface. An interface name is merely an example for description. This is not specifically limited in embodiments of this application. It should be understood that embodiments of this application are not limited to the communication system shown in FIG. 1. Names of the network elements shown in FIG. 1 are merely used as examples for description herein, and are not used as limitations on network elements included in an architecture of a communication system to which a method in embodiments of this application is applicable. The following describes functions of some network elements or devices in the communication system. Names of devices that implement functions of the core network in systems of different access technologies may be different. This is not limited in embodiments of this application.

It should be noted that the communication system shown in FIG. 1 does not constitute a limitation on the communication system to which embodiments of this application are applicable. The architecture of the communication system shown in FIG. 1 is a 5G system architecture. Optionally, in addition to the 5G system, the technical solutions provided in embodiments of this application may be further applied to a 4th generation (4th generation, 4G) mobile communication technology system, for example, an LTE system, or may be further applied to a next generation mobile communication system or another similar communication system. This is not specifically limited.

It should be noted that the architecture of the communication system shown in FIG. 1 is not limited to including only the network elements shown in the figure, and may further include another device not shown in the figure. Details are not described herein one by one.

It should be noted that a distribution form of the network elements is not limited in embodiments of this application. The distribution form shown in FIG. 1 is merely an example, and is not limited in embodiments of this application.

In a forwarding process of the conventional Ethernet, when a large quantity of data packets arrive at a forwarding port instantaneously, a problem of a large forwarding delay or a packet loss is caused. Therefore, the conventional Ethernet cannot provide services with high reliability and a guaranteed transmission delay, and cannot meet requirements of fields such as vehicle control and the industrial internet. Currently, a related TSN standard is defined for a requirement for reliable delay transmission. The standard provides a reliable delay transmission service based on layer 2 switching, and ensures reliability of data transmission of a delay-sensitive service and a predictable end-to-end transmission delay.

FIG. 2 is a system architectural diagram of interworking between a 5G network and a TSN. In this architecture, a 5G communication system (5G system, 5GS) and a TSN translator (translator) are collectively used as a logical TSN bridge (TSN bridge). A device side of a bridge (device side of a bridge) in FIG. 2 is a UE side of the logical TSN bridge. The 5GS exchanges information with a node in the TSN (for example, a TSN system in FIG. 2) via the TSN translator (for example, a TSN AF in FIG. 2) on a control plane. The exchanged information may include 5GS bridge (5GS bridge) capability information, TSN configuration information, time scheduling information and time synchronization information of a TSN input/output port, and the like. In addition, a TSN translator (translator) is added on both a UPF side and the UE side to adapt to data transmission on a user plane. The TSN translator on the UPF side is, for example, a network-side TSN translator (network-side TSN translator, NW-TT) in FIG. 2, and the TSN translator on the UE side is, for example, a device-side TSN translator (device-side TSN translator, DS-TT) in FIG. 2. The DS-TT may be located inside a UE, or may be located outside the UE. The NW-TT is generally located inside a UPF. For a name of an interface between two network elements in FIG. 2, refer to FIG. 2. Details are not described again.

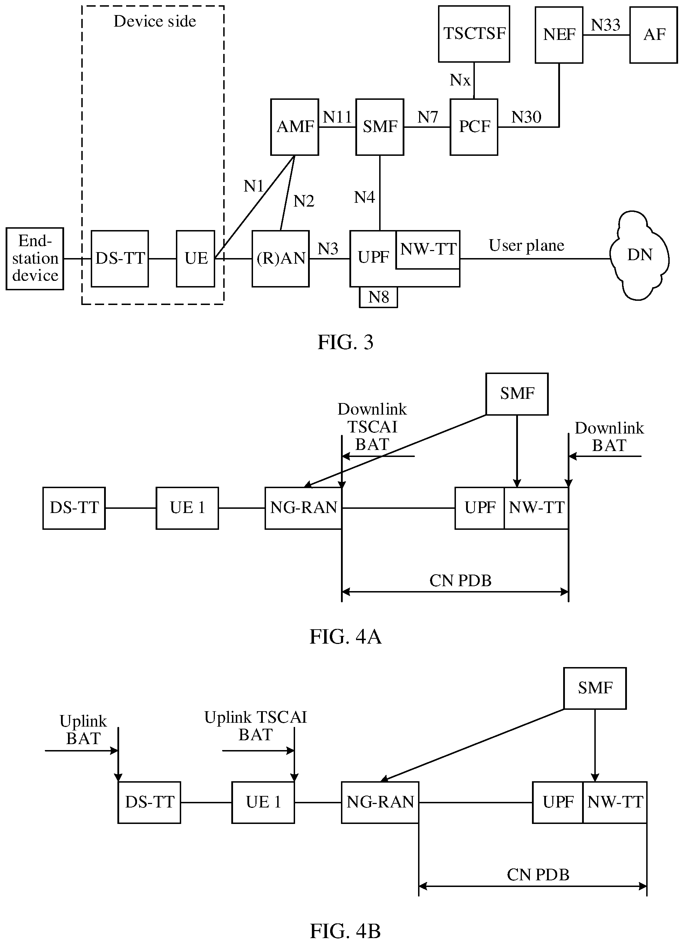

FIG. 3 is a system architectural diagram of a 5G network that supports a TSC service when the 5G network does not interwork with a TSN. In this architecture, a delay-sensitive communication and clock synchronization function (time-sensitive communication and time synchronization function, TSCTSF) network element is newly added, and the network element may enable the TSC service in a non-TSN scenario. The TSCTSF network element includes at least one of the following functions: associating a time synchronization service request that is from an AF with an AF session (AF session); exchanging a port management information container (port management information container, PMIC) with a DS-TT, exchanging a user plane node management information container (user plane node management information container, UMIC) with an NW-TT, and managing and controlling the DS-TT/NW-TT; detecting availability of 5GS bridge or 5GS node information reported by a PCF; creating a TSC assistance container (TSC assistance container) based on a service type parameter provided by the AF/an NEF, and providing the container for the PCF; and determining a 5GS bridge delay (5GS bridge delay) based on UE-DS-TT residence time (DS-TT residence time), and providing the 5GS bridge delay for the PCF. The UE-DS-TT residence time is, for example, duration for a service flow to arrive at an egress of a UE from an ingress of the DS-TT.

For some network elements in FIG. 2 or FIG. 3, refer to the foregoing descriptions of FIG. 1.

For ease of description, the network element shown in any one of FIG. 1 to FIG. 3 is used as an example for description in the following embodiments of this application, and an XX network element is directly referred to as an XX for short. For example, an SMF network element is referred to as an SMF for short, a PCF network element is referred to as a PCF for short, a TSN AF network element is referred to as a TSN AF for short, and a TSCTSF network element is referred to as a TSCTSF for short. It should be understood that names of all network elements in embodiments of this application are merely used as examples, and all the network elements may also be referred to as other names in future communication. Alternatively, in future communication, the network element in embodiments of this application may further be replaced with another entity, device, or the like that has a same function. This is not limited in embodiments of this application. Unified descriptions are provided herein, and details are not described below again.

For the architecture shown in FIG. 2 or FIG. 3, a RAN may obtain, from a core network, time at which a quality of service QoS flow arrives at an ingress of the RAN, so that the RAN can schedule a resource for the QoS flow based on the time at which the QoS flow arrives at the ingress of the RAN. The architecture shown in FIG. 2 is used as an example. In this architecture, in a centralized network configuration (centralized network configuration, CNC) in the TSN, time at which a service flow arrives at the 5GS and time at which the service flow leaves the 5GS are configured at a flow granularity. Uncertainty caused by air interface transmission, wired transmission, and the like between the UE and the UPF may be eliminated by using a buffer at an endpoint TT (for example, the DS-TT or the NW-TT).

The TSN AF can determine, based on scheduling information of the service flow obtained from the CNC, time at which the service flow arrives at an ingress of the 5GS. If the service flow is a service flow in a downlink direction, that the service flow arrives at the ingress of the 5GS means that the service flow arrives at an ingress of the NW-TT. Refer to FIG. 4A. Downlink burst arrival time (downlink burst arrival time, DL BAT) is time at which the downlink service flow arrives at the ingress of the 5GS. If the service flow is a service flow in an uplink direction, that the service flow arrives at the ingress of the 5GS means that the service flow arrives at an ingress of the DS-TT. Refer to FIG. 4B. Uplink burst arrival time (uplink burst arrival time, UE BAT) is time at which the uplink service flow arrives at the ingress of the 5GS. The TSN AF may provide, for an SMF via a PCF, information about the time at which the service flow arrives at the ingress of the 5GS. The SMF further calculates, based on the time information, time at which a QoS flow corresponding to the service flow arrives at an NG-RAN in a downlink direction, for example, downlink (DL) TSC assistance information (TSC assistance information, TSCAI) burst arrival time (burst arrival time, BAT) in FIG. 4A, and calculates time at which the QoS flow corresponding to the service flow is sent from the UE in an uplink direction, for example, uplink (UL) TSCAI BAT in FIG. 4B. Information about the time calculated by the SMF may be provided for the RAN, so that the RAN schedules a resource for the service flow based on the time information.

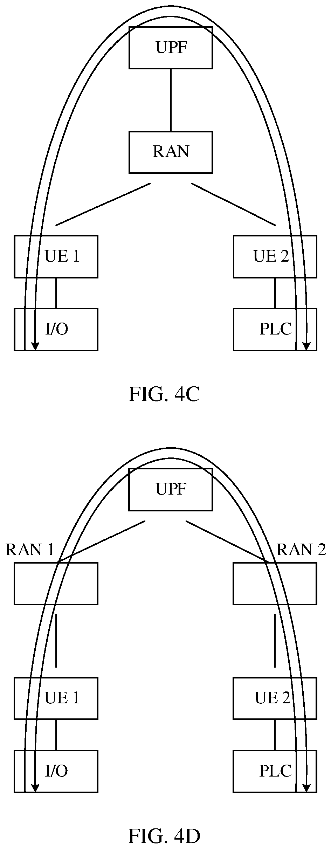

Some service flows may be associated with each other. For example, if a UE 1 communicates with a UE 2 via an access network and the core network, two service flows may be involved: a service flow sent by the UE 1 to the UE 2 and a service flow sent by the UE 2 to the UE 1. Time at which the two service flows arrive at the ingress of the RAN or egresses of the UEs is associated to some extent. Correspondingly, time at which two QoS flows used to transmit the two service flows arrive at the ingress of the RAN or the egresses of the UEs is also associated to some extent. For example, this association is reflected as follows: After the QoS flow sent by the UE 1 to the UE 2 arrives at the egress of the UE 1, the QoS flow sent by the UE 2 to the UE 1 may arrive at the ingress of the RAN after a specific time period. FIG. 4C and FIG. 4D show two scenarios of communication between a UE 1 and a UE 2. Input/output (input/output, I/O) is load of the UE 1, and a programmable logic controller (programmable logic controller, PLC) is load of the UE 2. The UE 1 is, for example, the UE 1 in FIG. 4C or FIG. 4D, and the UE 2 is the UE 2 in FIG. 4C or FIG. 4D. Alternatively, the UE 1 is, for example, the input/output (input/output, I/O) in FIG. 4C or FIG. 4D, and the UE 2 is the programmable logic controller (programmable logic controller, PLC) in FIG. 4C or FIG. 4D. FIG. 4C is a single-RAN scenario, to be specific, two QoS flows for communication between the UE 1 and the UE 2 are transmitted by one RAN. FIG. 4D is a multi-RAN scenario, to be specific, two QoS flows for communication between the UE 1 and the UE 2 are transmitted by different RANs. Each arrow in FIG. 4C and FIG. 4D represents one service flow.

For a RAN, after receiving time information from an SMF, if the RAN finds that time information corresponding to a QoS flow conflicts with time information corresponding to another QoS flow, the RAN needs to coordinate resources scheduled for the QoS flows.

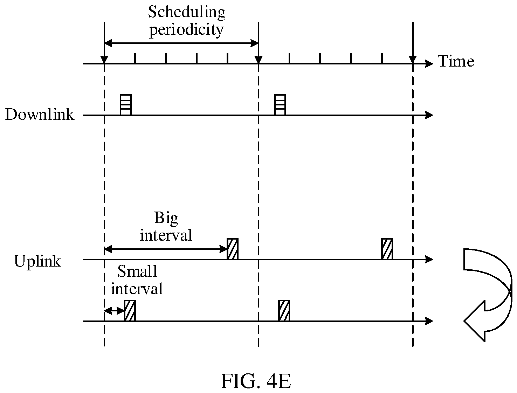

For example, refer to FIG. 4E. A scheduling periodicity indicates a periodicity of a resource scheduled by the RAN for a QoS flow, and a block marked with slashes identifies a data packet carried in the QoS flow. In FIG. 4E, for a QoS flow (for example, referred to as a QoS flow 1) used to transmit a downlink service flow, for example, the RAN adjusts a resource scheduled for the QoS flow, so that there is a small interval between arrival time of the QoS flow and a scheduling occasion of the RAN. In other words, when the QoS flow arrives at an ingress of the RAN, the RAN just has (or is quickly to have) a resource for scheduling the QoS flow. Therefore, a data packet carried in the QoS flow can be transmitted in time. A block marked with horizontal lines in FIG. 4E indicates the resource scheduled by the RAN for the QoS flow used to transmit the downlink service flow.

In FIG. 4E, a QoS flow used to transmit an uplink service flow is associated with the QoS flow used to transmit the downlink service flow, but the RAN may only adjust the resource scheduled for the QoS flow used to transmit the downlink service flow, and does not adjust a resource scheduled for the QoS flow used to transmit the uplink service flow (where for example, the resource scheduled for the QoS flow used to transmit the uplink service flow does not conflict with another resource and does not need to be adjusted). Alternatively, although the RAN also adjusts a resource scheduled for a QoS flow used to transmit an uplink service flow (where for example, the resource scheduled for the QoS flow used to transmit the uplink service flow conflicts with another resource), the RAN separately considers and adjusts the resources during adjustment. In this case, an adjusted resource for the QoS flow used to transmit the uplink service flow does not necessarily adapt to time at which the QoS flow arrives at an egress of the UE. After the RAN adjusts the resource scheduled for the QoS flow used to transmit the uplink service flow, if there is a small interval (small interval) between arrival time of the QoS flow and an adjusted scheduling occasion of the RAN, in other words, when the QoS flow arrives at the egress of the UE, the RAN just has (or is quickly to have) a resource for scheduling the QoS flow, a data packet carried in the QoS flow can be transmitted in time. However, if there is a big interval (big interval) between arrival time of the QoS flow and an adjusted scheduling occasion of the RAN, in other words, when the QoS flow arrives at the egress of the UE, a resource scheduled by the RAN for the QoS flow has not been prepared (or needs to be prepared for long time), the QoS flow can be transmitted only after the scheduled resource is prepared. This may cause a large delay. The block marked with slashes in FIG. 4E indicates the resource scheduled by the RAN for the QoS flow used to transmit the uplink service flow.

It can be learned that coordination of the RAN may result in a case in which resources scheduled for associated QoS flows do not meet time at which the associated QoS flows actually arrive at the ingress of the RAN or the egresses of the UEs.

In view of this, the technical solutions in embodiments of this application are provided. In embodiments of this application, service flows transmitted by using a first QoS flow and a second QoS flow, for example, belong to a same service flow. Therefore, it is considered that the first QoS flow matches the second QoS flow. For example, the first QoS flow and the second QoS flow are two QoS flows transmitted through communication between two terminal devices. For example, communication between the two terminal devices is forwarded via a first access network device. In this case, time at which the two QoS flows arrive at the first access network device or the terminal devices is associated. When time at which one of the QoS flows arrives at the first access network device is relatively determined, if the first access network device schedules any resource for the other QoS flow, time corresponding to the scheduled resource in time domain may be different from time at which the other QoS flow arrives at the terminal device. Therefore, in embodiments of this application, the first access network device may determine first expected assistance information and second expected assistance information when considering that the two QoS flows match. In this case, a transmission occasion of the first QoS flow indicated by the first expected assistance information may be associated with a transmission occasion of the second QoS flow indicated by the second expected assistance information. A core network device may determine a transmission occasion of the first QoS flow and a transmission occasion of the second QoS flow based on this. In this case, the finally determined transmission occasion of the first QoS flow is also associated with the finally determined transmission occasion of the second QoS flow. If the first access network device schedules resources for the first QoS flow and the second QoS flow based on this, the scheduled resources can meet the time at which the two QoS flows arrive at the first access network device or the terminal devices, so that the two QoS flows can be properly transmitted. According to the method provided in embodiments of this application, resources of associated QoS flows may be coordinated, to avoid, as much as possible, a case in which a resource scheduled for a QoS flow does not match a resource scheduled for another QoS flow, and reduce a transmission delay of the QoS flow.

To better describe embodiments of this application, the following describes the methods provided in embodiments of this application with reference to the accompanying drawings. In the accompanying drawings corresponding to embodiments of this application, all optional steps are represented by dashed lines. The method provided in each embodiment of this application may be applied to the network architecture shown in FIG. 2 or FIG. 3. For example, a first access network device in each embodiment of this application may be the (R)AN in FIG. 2 or FIG. 3, a first core network device in each embodiment of this application may be the SMF in FIG. 2 or FIG. 3, a second core network device in each embodiment of this application may be the TSN AF in FIG. 2 or the TSCTSF in FIG. 3, and a policy control network element in each embodiment of this application may be the PCF in FIG. 2 or FIG. 3.

For ease of description, in the following embodiments, the access network device is also replaced with the RAN (for example, the first access network device may be replaced with a "first RAN", and a second access network device may be replaced with a "second RAN"), the first core network device is replaced with the SMF, the second core network device is replaced with the TSN AF or the TSCTSF, and the policy control network element is replaced with the PCF. In addition, in the following embodiments, steps performed by the TSN AF may also be replaced with steps performed by the TSCTSF. The TSN AF is used as an example in the following.

In addition, it should be noted that an "expectation" in each embodiment of this application is an expectation for time. For example, "an expected transmission occasion of a first QoS flow" may be understood as an expected transmission occasion, but cannot be understood as an expectation for the QoS flow, where the transmission occasion is a transmission occasion of the first QoS flow. In other words, the QoS flow has been determined, and transmission time of the QoS flow needs to be determined in embodiments of this application. Therefore, the "expectation" is an expectation for the time.

FIG. 5 is a flowchart of a first communication method according to an embodiment of this application. In addition to the architecture shown in FIG. 2 or FIG. 3, the method may be further applicable to the architecture shown in FIG. 4C.

S501: A TSN AF obtains service forwarding information.

For example, the TSF AF may receive the service forwarding information from a CNC; the TSN AF may obtain the service forwarding information through derivation based on a parameter provided by the CNC, where the parameter includes, for example, an egress ports of 5GS bridge (egress ports of 5GS Bridge) parameter such as port information of a DS-TT (ports on DS-TT); or the TSN AF may obtain the service forwarding information based on a configured pairing relationship (or association relationship) between UEs.

If S501 is performed by a TSCTSF, the TSCTSF may obtain the service forwarding information from the AF shown in FIG. 3. For example, the TSCTSF may obtain the service forwarding information from the AF via an NEF; the TSCTSF may obtain the service forwarding information through derivation based on a parameter provided by the AF, where the parameter includes, for example, the port information of the DS-TT and an internet protocol (internet protocol, IP) address; or the TSCTSF may obtain the service forwarding information based on the configured pairing relationship between the UEs.

The service forwarding information includes, for example, a destination media access control (media access control, MAC) address and a virtual local area network identifier of a TSN stream (destination MAC address and virtual local area network ID of TSN stream), or includes a port number in a port map (port number in a port MAP). In addition, the service forwarding information may further include information about a service flow. The service flow is, for example, referred to as a third service flow, and information about the third service flow includes, for example, one or more of the following: a periodicity of the third service flow, direction information (for example, an uplink direction or a downlink direction) of the third service flow, or BAT information of the third service flow. Time indicated by the BAT information is, for example, time at which the third service flow arrives at an ingress of a 5GS (for example, an ingress of the DS-TT in FIG. 2). The BAT information includes, for example, specific burst arrival time, or includes allowed earliest burst arrival time or allowed latest burst arrival time.

For a scenario of communication between the UEs, the direction information included in the service forwarding information may indicate two directions, for example, indicate both an uplink direction and a downlink direction. In this case, the TSN AF may split, into two service flows, the third service flow corresponding to the service forwarding information. For example, the two service flows obtained through splitting are respectively referred to as a first service flow and a second service flow. The first service flow is, for example, a service flow in an uplink direction, and the second service flow is, for example, a service flow in a downlink direction; or the first service flow is, for example, a service flow in a downlink direction, and the second service flow is, for example, a service flow in an uplink direction. The first service flow and the second service flow actually belong to the third service flow. Both the first service flow and the second service flow are flows between the UE and a UPF, and the third service flow may be understood as a service flow of a TSC service, and may be referred to as a TSC stream (stream). From a service perspective, the first service flow and the second service flow are two different segments of the TSC stream.

The TSN AF may determine an input port and an output port of the third service flow based on locally configured information or based on the service forwarding information, and further determine, based on types of the input port and the output port (where for example, both the input port and the output port are DS-TT ports), that the third service flow is a service flow for communication between the UEs, that is, determine that a current communication scenario is communication between the UEs.

Optionally, the TSN AF may further determine, based on the service forwarding information, that a first UE is associated with a second UE, or that the first UE matches the second UE. The first UE and the second UE are UEs that transmit the first service flow and the second service flow to each other. The first UE is a UE corresponding to the first service flow. For example, the first UE is a transmitting end of the first service flow. The second UE is a UE corresponding to the second service flow. For example, the second UE is a transmitting end of the second service flow.

S502: The TSN AF sends first information to a PCF. Correspondingly, the PCF receives the first information from the TSN AF.

The first information may include information about the first service flow and information about the second service flow. The first information includes, for example, a TSC assistance container, and the TSC assistance container may include the information about the first service flow and the information about the second service flow. Optionally, the first information may include two TSC assistance containers: a first TSC assistance container and a second TSC assistance container. The first TSC assistance container includes the information about the first service flow, and the second TSC assistance container includes the information about the second service flow. The information about the first service flow includes, for example, one or more of the following: BAT information of the first service flow, a periodicity of the first service flow, or direction information of the first service flow. Similarly, the information about the second service flow includes, for example, one or more of the following: BAT information of the second service flow, a periodicity of the second service flow, or direction information of the second service flow.

Optionally, the first information further includes association information, and the association information may indicate that the first UE is associated with the second UE, or indicate that the first UE matches the second UE.

The association information may indicate, in different indication manners, that the first UE is associated with the second UE. For example, in an indication manner, the association information includes an identifier of the first UE and an identifier of the second UE; or it is understood as that the association information includes information about an association relationship between an identifier of the first UE and an identifier of the second UE, and the identifiers of the two UEs may indicate that the two UEs are associated. Optionally, an identifier of a UE includes, for example, a generic public subscription identifier (generic public subscription identifier, GPSI) or a subscription permanent identifier (subscription permanent identifier, SUPI) of the UE.

Alternatively, in another indication manner, the association information includes address information of the first UE, and includes address information of the second UE; or it is understood as that the association information includes information about an association relationship between two pieces of address information, and the two pieces of address information may indicate that the two UEs are associated. An address of a UE includes, for example, an IP version 4 (IPv4) address, an IP version 6 (IPv6) address/IPv6 prefix, or a MAC address of the UE.

Alternatively, in still another indication manner, the association information includes DS-TT port media access control (media access control, MAC) address (DS-TT port MAC address) information corresponding to the first UE, and includes DS-TT port MAC address information corresponding to the second UE; or it is understood as that the association information includes information about an association relationship between two pieces of MAC address information, and the two pieces of MAC address information may indicate that the two UEs are associated.

Alternatively, in yet another indication manner, the association information includes information about an association relationship between the first service flow and the second service flow, where for example, the association relationship includes an identifier of the first service flow and an identifier of the second service flow; or it is understood as that the association relationship includes information about an association relationship between an identifier of the first service flow and an identifier of the second service flow. This indication manner may be considered as indicating the association relationship between the two service flows. However, because the service flows are related to the UEs, the indication manner may also be considered as indicating an association relationship between the two UEs. Optionally, for example, an identifier of a service flow includes an identifier of an application corresponding to the service flow, or includes a filter of the service flow. The filter includes, for example, a group of parameter values or ranges of packet flow headers, and may be used to identify one or more packet flows.

The association information may be included in the TSC assistance container; or may not be included in the TSC assistance container, but is sent by using other information.

Alternatively, the first information may not include the foregoing shown association information, and the association relationship between the two service flows is implicitly indicated by using the information about the first service flow and the information about the second service flow.

S503: The PCF sends a policy and charging control (policy and charging control, PCC) rule to an SMF. Correspondingly, the SMF receives the PCC rule from the PCF.

The PCF may generate a first PCC rule for the first service flow and a second PCC rule for the second service flow based on the first information obtained from the TSN AF. The first PCC rule may include the first TSC assistance container, and the second PCC rule may include the second TSC assistance container. The PCF may send the first PCC rule and the second PCC rule to the SMF.

Optionally, if the first information in S502 includes the association information, the PCF may also send the association information to the SMF. The association information may not be included in the PCC rule, but is sent by using other information.

S504: The SMF determines assistance information 1 and assistance information 2. For example, the SMF may determine the assistance information 1 based on the first TSC assistance container included in the first PCC rule, and determine the assistance information 2 based on the second TSC assistance container included in the second PCC rule. For example, the assistance information 1 is also referred to as third assistance information, and the assistance information 2 is also referred to as fourth assistance information. The assistance information 1 may indicate a transmission occasion of a first QoS flow, for example, indicate BAT of the first QoS flow, or indicate a time range of the BAT of the first QoS flow. The assistance information 2 may indicate a transmission occasion of a second QoS flow, for example, indicate BAT of the second QoS flow, or indicate a time range of the BAT of the second QoS flow. The first QoS flow is used to transmit the first service flow, and a direction of the first QoS flow is the same as a direction of the first service flow. The second QoS flow is used to transmit the second service flow, and a direction of the second QoS flow is the same as a direction of the second service flow. The assistance information is, for example, TSCAI BAT information (information).

For example, the SMF may obtain the BAT information of the first service flow from the first TSC assistance container. For example, the BAT information is referred to as BAT information 1. In addition, the SMF obtains the BAT information of the second service flow from the second TSC assistance container. For example, the BAT information is referred to as BAT information 2. The BAT information 1 and the BAT information 2 are time information based on a TSN AF clock. The SMF may convert, based on a time deviation (and/or a clock drift) between a 5GS clock and the TSN AF clock, the BAT information 1 into BAT information that is based on the 5GS clock. For example, the converted BAT information 1 is referred to as BAT information 3. In addition, the SMF may convert, based on the time deviation (and/or the clock drift), the BAT information 2 into BAT information that is based on the 5GS clock. For example, the converted BAT information 2 is referred to as BAT information 4. The SMF may determine the assistance information 1 based on the BAT information 3, and determine the assistance information 2 based on the BAT information 4.

Optionally, the assistance information 1 may include one or more of the following: a periodicity of the first QoS flow, direction information of the first QoS flow, or BAT information that is of the first QoS flow and that is related to a RAN. The assistance information 2 may include one or more of the following: a periodicity of the second QoS flow, direction information of the second QoS flow, or BAT information that is of the second QoS flow and that is related to the RAN. If a service flow transmitted by using a QoS flow is a downlink service flow, BAT information that is of the QoS flow and that is related to the RAN indicates, for example, time at which a 1st data packet of a data burst of the QoS flow arrives at an ingress of the RAN, where this is described below as indicating time at which the QoS flow arrives at the ingress of the RAN, for example, the downlink TSCAI burst arrival time in FIG. 4A; or BAT information that is of the QoS flow and that is related to the RAN may indicate a time range in which the QoS flow arrives at an ingress of the RAN. If a service flow transmitted by using a QoS flow is an uplink service flow, BAT information that is of the QoS flow and that is related to the RAN indicates, for example, time at which a 1st data packet of a data burst of the QoS flow arrives at an egress of the UE, where this is described below as indicating time at which the QoS flow arrives at the egress of the UE, for example, the uplink TSCAI burst arrival time in FIG. 4B; or BAT information that is of the QoS flow and that is related to the RAN may indicate a time range in which the QoS flow arrives at an egress of the UE. If one piece of BAT information indicates a time range in which one QoS flow arrives at the ingress of the RAN or the egress of the UE, optionally, the time range may include two endpoint values, for example, an endpoint 1 and an endpoint 2, and it indicates that time indicated by the time range needs to be later than or equal to the endpoint 2 and earlier than or equal to the endpoint 1. Alternatively, the time range may include one endpoint value, for example, an endpoint 3, and it indicates that time indicated by the time range needs to be earlier than or equal to the endpoint 3. This is equivalent to that the time range indicates latest arrival time.

Optionally, for a QoS flow used to transmit the downlink service flow, the SMF may determine, based on BAT information corresponding to the QoS flow and a core network (core network, CN) packet delay budget (packet delay budget, PDB), BAT information that is of the QoS flow and that is related to the RAN. For example, the BAT information that is of the QoS flow used to transmit the downlink service flow and that is related to the RAN=the BAT information corresponding to the QoS flow+the CN PDB. Refer to FIG. 4A. The CN PDB is duration of a packet delay budget during transmission of the QoS flow from an ingress of the UPF (or an ingress of an NW-TT) to the ingress of the RAN. For example, if the first QoS flow is a QoS flow used to transmit the downlink service flow, the SMF may determine, based on the BAT information 3 and the CN PDB, the BAT information that is of the first QoS flow and that is related to the RAN; or if the second QoS flow is a QoS flow used to transmit the downlink service flow, the SMF may determine, based on the BAT information 4 and the CN PDB, the BAT information that is of the second QoS flow and that is related to the RAN.

For a QoS flow used to transmit the uplink service flow, the SMF may determine, based on BAT information corresponding to the QoS flow and UE-DS-TT residence time, BAT information that is of the QoS flow and that is related to the RAN. For example, if the BAT information that is of the QoS flow and that is related to the RAN is time at which the QoS flow is sent from the UE, the BAT information that is of the QoS flow used to transmit the uplink service flow and that is related to the RAN=the BAT information corresponding to the QoS flow+(the UE-DS-TT residence time). For the UE-DS-TT residence time, refer to the foregoing descriptions. In addition, optionally, if the BAT information that is of the QoS flow and that is related to the RAN is time at which the QoS flow arrives at the ingress of the RAN, when determining the BAT information that is of the QoS flow used to transmit the uplink service flow and that is related to the RAN, the SMF may further consider an access network (access network, AN) PDB. For example, the BAT information that is of the QoS flow used to transmit the uplink service flow and that is related to the RAN=the BAT information corresponding to the QoS flow+(the UE-DS-TT residence time)+the AN PDB. Refer to FIG. 4B. The AN PDB may be duration of a packet delay budget during transmission of the QoS flow from the egress of the UE to an egress of the RAN. It may also be understood as that, the AN PDB is a difference between duration of transmission of the QoS flow from an ingress of the UE to an egress of the NW-TT and the CN PDB. For example, if the first service flow transmitted by using the first QoS flow is an uplink service flow, the SMF may determine, based on the BAT information 3 and the UE-DS-TT residence time (or based on the BAT information 3, the UE-DS-TT residence time, and the AN PDB), the BAT information that is of the first QoS flow and that is related to the RAN; or if the second service flow transmitted by using the second QoS flow is an uplink service flow, the SMF may determine, based on the BAT information 4 and the UE-DS-TT residence time (or based on the BAT information 4, the UE-DS-TT residence time, and the AN PDB), the BAT information that is of the second QoS flow and that is related to the RAN.

In addition, the SMF may bind the first service flow to the first QoS flow, to transmit the first service flow by using the first QoS flow; and bind the second service flow to the second QoS flow, to transmit the second service flow by using the second QoS flow.

In this embodiment of this application, the first service flow and the second service flow belong to the same service flow, and it may be considered that the first service flow matches the second service flow. The first QoS flow is used to transmit the first service flow, and the second QoS flow is used to transmit the second service flow. Therefore, it may also be considered that the first QoS flow matches the second QoS flow. Optionally, the SMF may further determine matching information between the QoS flows, where the matching information may indicate that the first QoS flow matches (or is associated with) the second QoS flow, or indicate that the first QoS flow and the second QoS flow are used to transmit a same service flow. For example, the SMF may determine the matching information based on the association information received from the PCF; or the SMF may determine the matching information based on service forwarding information, where the service forwarding information is, for example, the service forwarding information in S501. In addition to sending the first information to the PCF, the TSN AF may further send the service forwarding information to the PCF, and then the PCF sends the service forwarding information to the SMF. For example, if the SMF determines, based on the service forwarding information, that a data packet of the first service flow is not forwarded to a DN after the data packet passes through the UPF, but is forwarded to another UE, and determines, based on the service forwarding information, that a data packet of the second service flow is not from the DN but from a UE that receives the first service flow, the SMF can determine that the two service flows match, and then may determine that the two QoS flows used to transmit the two service flows match.

Optionally, the matching information may include tunnel information corresponding to a first PDU session and a QoS flow identifier (QoS flow identifier, QFI) of the first QoS flow, and include tunnel information corresponding to a second PDU session and a QFI of the second QoS flow. Optionally, the matching information may further include the identifier of the first UE and the identifier of the second UE.

The tunnel information corresponding to the first PDU session is, for example, access network tunnel information (AN tunnel information) of the first PDU session, and the tunnel information corresponding to the second PDU session is, for example, access network tunnel information of the second PDU session; or the tunnel information corresponding to the first PDU session is, for example, core network tunnel information (CN tunnel information) of the first PDU session, and the tunnel information corresponding to the second PDU session is, for example, core network tunnel information of the second PDU session. For a PDU session, an access network tunnel and a core network tunnel that correspond to the PDU session are, for example, a same tunnel such as a general packet radio service tunnelling protocol (general packet radio service tunnelling protocol, GTP) tunnel between the RAN and the UPF. When the tunnel is used by the RAN to send information to the UPF, the UPF needs to allocate a tunnel endpoint ID (tunnel endpoint ID, TEID) to the tunnel, and the RAN needs to use the TEID to send the information to the UPF through the tunnel. When the tunnel is used by the UPF to send information to the RAN, the RAN needs to allocate a TEID to the tunnel, and the UPF needs to use the TEID to send the information to the RAN through the tunnel. For example, core network tunnel information of the tunnel includes the TEID allocated by the UPF to the tunnel, and access network tunnel information of the tunnel includes the TEID allocated by the RAN to the tunnel.

Alternatively, the matching information may include an identifier (for example, an ID) of a first PDU session and a QFI of the first QoS flow, and include an identifier of a second PDU session and a QFI of the second QoS flow. Optionally, the matching information may further include the identifier of the first UE and the identifier of the second UE.

The first PDU session is a PDU session in which the first QoS flow is located, and the second PDU session is a PDU session in which the second QoS flow is located. The first PDU session and the second PDU session are two different PDU sessions. In addition, in each embodiment of this application, because the first PDU session and the second PDU session are two different PDU sessions, a parameter of the first PDU session and a parameter of the second PDU session are separately transmitted. For example, information related to the first QoS flow belongs to the parameter of the first PDU session, and information related to the second QoS flow belongs to the parameter of the second PDU session. The two types of information are separately transmitted. For example, the SMF is to send the assistance information 1 and the assistance information 2 to a first RAN in S505 to be described below, where the assistance information 1 is information related to the first QoS flow, and the assistance information 2 is information related to the second QoS flow. In this case, the two pieces of assistance information may be separately transmitted to the first RAN.

S505: The SMF sends the assistance information 1 and the assistance information 2 to the first RAN. Correspondingly, the first RAN receives the assistance information 1 and the assistance information 2 from the SMF. In this embodiment of this application, for example, the first QoS flow and the second QoS flow are transmitted by a same RAN, and the RAN is, for example, referred to as the first RAN.

Optionally, the SMF may further send the matching information to the first RAN.

S501 to S505 are optional steps. For example, even if S501 to S505 are not performed, the first RAN may perform the following S506. For example, the first RAN may determine, in another manner, time at which the first QoS flow and the second QoS flow arrive at the first RAN or the UEs, so that S506 can be performed. For example, the first RAN may obtain configuration information. The configuration information includes a correspondence between single network slice selection assistance information (single network slice selection assistance information, S-NSSAI) of the first PDU session and single network slice selection assistance information of the second PDU session. The correspondence may be used by the first RAN to determine the time at which the first QoS flow and the second QoS flow arrive at the first RAN or the UEs.

S506: The first RAN determines first expected assistance information and second expected assistance information.

The first RAN may determine the transmission occasion of the first QoS flow based on the assistance information 1, for example, may determine the time at which the first QoS flow arrives at the first RAN or the UE, or determine a time range in which the first QoS flow arrives at the first RAN or the UE. Based on the transmission occasion of the first QoS flow, the first RAN may schedule a corresponding resource for the first QoS flow, or the first RAN may determine a scheduling resource of the first QoS flow to transmit the first QoS flow. For example, the scheduling resource determined by the first RAN based on the assistance information 1 is referred to as a first scheduling resource. A time domain resource included in the first scheduling resource is, for example, consistent with the transmission occasion indicated by the assistance information 1. For example, the time domain resource included in the first scheduling resource is the same as the transmission occasion indicated by the assistance information 1. Alternatively, a time interval between a time domain resource included in the first scheduling resource and the transmission occasion indicated by the assistance information 1 is less than a first threshold, so that after the first QoS flow arrives at the first RAN or the UE, the first QoS flow can be transmitted in time. Similarly, the first RAN may determine the transmission occasion of the second QoS flow based on the assistance information 2. Based on the transmission occasion of the second QoS flow, the first RAN may determine a scheduling resource, for example, referred to as a third scheduling resource, of the second QoS flow. A time domain resource included in the third scheduling resource may also be consistent with the transmission occasion indicated by the assistance information 2. In this embodiment of this application, the resource scheduled by the RAN for the QoS flow is, for example, a semi-permanent scheduling (semi-persistent scheduling, SPS) resource, or may be a resource of another type.

In this embodiment of this application, for example, the first scheduling resource conflicts with another resource, and/or the third scheduling resource conflicts with the another resource. The another resource is, for example, a scheduling resource determined by the first RAN for another QoS flow (which is a QoS flow other than the first QoS flow and the second QoS flow). Therefore, in each embodiment of this application, the "another resource" may also be understood as "another scheduling resource". That two resources conflict means, for example, that the two resources partially or completely overlap. If a resource conflict occurs, the first RAN may re-determine expected assistance information for a corresponding QoS flow, to reduce a transmission delay of the QoS flow.

If the first scheduling resource conflicts with another resource, the first RAN may determine a resource that does not conflict with the another resource, and may use the resource as a scheduling resource of the first QoS flow. For example, the resource is referred to as a second scheduling resource. The first RAN may determine expected assistance information of the first QoS flow based on the second scheduling resource (or based on a time domain location of the second scheduling resource). The expected assistance information of the first QoS flow may indicate an expected transmission occasion of the first QoS flow. For example, the transmission occasion indicated by the expected assistance information of the first QoS flow matches the second scheduling resource. In this way, when the first QoS flow arrives at the first RAN or the UE, the first QoS flow can be transmitted in time. That the first RAN determines expected assistance information for a QoS flow is equivalent to re-setting, for the QoS flow, time at which the QoS flow arrives at the egress of the UE or the ingress of the RAN. Optionally, the expected assistance information is, for example, represented as expected TSCAI BAT information.

Alternatively, if the third scheduling resource conflicts with another resource, the first RAN may determine a resource that does not conflict with the another resource, and may use the resource as a scheduling resource of the second QoS flow. For example, the resource is referred to as a fourth scheduling resource. The first RAN may determine expected assistance information of the second QoS flow based on the fourth scheduling resource (or based on a time domain location of the fourth scheduling resource). The expected assistance information of the second QoS flow may indicate an expected transmission occasion of the second QoS flow. For example, the transmission occasion indicated by the expected assistance information of the second QoS flow matches the fourth scheduling resource. In this way, when the second QoS flow arrives at the first RAN or the UE, the second QoS flow can be transmitted in time.

It should be noted that, for the first QoS flow and the second QoS flow, if the first RAN determines the expected assistance information of one of the QoS flows, in other words, the first RAN replans, for the QoS flow, the time at which the QoS flow arrives at the ingress of the RAN or the egress of the UE, because transmission time of the two QoS flows is associated, if the time at which one of the QoS flows arrives at the ingress of the RAN or the egress of the UE changes, the time at which the other QoS flow arrives at the egress of the UE or the ingress of the RAN may also change. Therefore, optionally, if the first RAN determines the expected assistance information of the first QoS flow, the first RAN may further determine the expected assistance information of the second QoS flow; or if the first RAN determines the expected assistance information of the second QoS flow, the first RAN may further determine the expected assistance information of the first QoS flow. For example, the expected assistance information of the first QoS flow determined by the first RAN is referred to as first expected assistance information, and the expected assistance information of the second QoS flow determined by the first RAN is referred to as second expected assistance information. A scheduling resource determined based on the first expected assistance information does not conflict with another scheduling resource, and a scheduling resource determined based on the second expected assistance information does not conflict with the another scheduling resource.

In addition, the first expected assistance information is associated with the second expected assistance information, or the first expected assistance information matches the second expected assistance information. The association or matching is represented as follows: If a transmission occasion of the first QoS flow indicated by the first expected assistance information has a first offset relative to an estimated transmission occasion of the first QoS flow, a transmission occasion of the second QoS flow indicated by the second expected assistance information also has the first offset relative to an estimated transmission occasion of the second QoS flow. On the contrary, if a transmission occasion of the second QoS flow indicated by the second expected assistance information has a first offset relative to an estimated transmission occasion of the second QoS flow, a transmission occasion of the first QoS flow indicated by the first expected assistance information also has the first offset relative to an estimated transmission occasion of the first QoS flow. The estimated transmission occasion of the first QoS flow is, for example, the transmission occasion indicated by the assistance information 1, and the estimated transmission occasion of the second QoS flow is, for example, the transmission occasion indicated by the assistance information 2.

The QoS flow has no direction, but the service flow transmitted by using the QoS flow has a direction. Therefore, if the first service flow transmitted by using the first QoS flow is an uplink service flow, and the second service flow transmitted by using the second QoS flow is a downlink service flow, the transmission occasions indicated by the first expected assistance information and the second expected assistance information have the same offset relative to the corresponding estimated transmission occasions. It may be understood as that an uplink offset of the first QoS flow is consistent with a downlink offset of the second QoS flow.

Alternatively, if the first service flow transmitted by using the first QoS flow is a downlink service flow, and the second service flow transmitted by using the second QoS flow is an uplink service flow, the transmission occasions indicated by the first expected assistance information and the second expected assistance information have the same offset relative to the corresponding estimated transmission occasions. It may be understood as that a downlink offset of the first QoS flow is consistent with an uplink offset of the second QoS flow.

An uplink offset of a QoS flow is an offset of time at which the QoS flow arrives at the egress of the UE. A downlink offset of a QoS flow is an offset of time at which the QoS flow arrives at the ingress of the RAN.

For example, the first service flow transmitted by using the first QoS flow is a downlink service flow. The first RAN determines, based on the assistance information 1, that the first QoS flow is to arrive at the first RAN at a moment T1. The first RAN may schedule the first scheduling resource for the first QoS flow based on the moment T1. A start time domain location of the first scheduling resource is a moment T2. A time interval between the moment T1 and the moment T2 is less than a first threshold. For example, the first threshold is determined based on processing time of the first RAN. However, if the first RAN finds that the first scheduling resource overlaps a scheduling resource of another QoS flow, the first RAN may determine a time domain resource that does not overlap the scheduled resource. Considering the association between the first QoS flow and the second QoS flow, when re-determining a scheduling resource, the first RAN may determine scheduling resources for the two QoS flows together. For example, the first RAN determines that neither the second scheduling resource nor the fourth scheduling resource overlaps the scheduled resource, and the fourth scheduling resource may be determined based on the second scheduling resource and a first time interval. If a start time domain location of the second scheduling resource is, for example, a T3 moment, the first RAN may determine the first expected assistance information based on this. For example, the first expected assistance information indicates the T3 moment. If a start time domain location of the fourth scheduling resource is, for example, a T4 moment, the first RAN may determine the second expected assistance information based on this. For example, the second expected assistance information indicates the T4 moment. For example, if BAT indicated by the first expected assistance information is delayed by 2 milliseconds (ms) relative to BAT indicated by the assistance information 1, BAT indicated by the second expected assistance information is also delayed by 2 ms relative to BAT indicated by the assistance information 2.

In the manner described above, the first RAN first determines the scheduled resource based on the assistance information; determines whether the resource conflicts with another scheduling resource; if the resource conflicts with the another scheduling resource, searches for a scheduling resource that does not conflict with the another scheduling resource; and then determines expected assistance information based on the scheduling resource that does not conflict with the another scheduling resource. Alternatively, in another manner, the first RAN may first determine a scheduling resource that does not conflict with another scheduling resource; determine whether received assistance information matches the scheduling resource that does not conflict with the another scheduling resource; and if the received assistance information does not match the scheduling resource, determine expected assistance information based on the scheduling resource that does not conflict with the another scheduling resource. For example, the first service flow transmitted by using the first QoS flow is a downlink service flow. The first RAN may first determine a scheduling resource that does not conflict with another scheduling resource. Considering the association between the first QoS flow and the second QoS flow, when determining the scheduling resource that does not conflict with the another scheduling resource, the first RAN may determine scheduling resources for the two QoS flows together. For example, the first RAN determines a first scheduling time window and a second scheduling time window, resources in the two scheduling time windows do not overlap with another scheduling resource, and there is a first time interval between corresponding resources in the two scheduling time windows. The corresponding resources in the two scheduling time windows are, for example, resources with a same relative time domain location in the two scheduling time windows, and a relative time domain location of a resource in a scheduling time window is, for example, an offset of the resource relative to start time of the scheduling time window. If the first RAN determines the two scheduling time windows, it may be determined whether the assistance information 1 and the assistance information 2 match the two scheduling time windows. For example, if the BAT indicated by the assistance information 1 is in the first scheduling time window, and the BAT indicated by the assistance information 2 is in the second scheduling time window, the assistance information 1 and the assistance information 2 match the two scheduling time windows. In this case, the first RAN does not need to determine expected assistance information, but schedules the first QoS flow based on the assistance information 1 and schedules the second QoS flow based on the assistance information 2. However, if the BAT indicated by the assistance information 1 is not in the first scheduling time window, and/or the BAT indicated by the assistance information 2 is not in the second scheduling time window, the assistance information 1 and the assistance information 2 do not match the two scheduling time windows. In this case, the first RAN may re-determine expected assistance information. For example, the first RAN may determine, in the first time window, the second scheduling resource as a scheduling resource of the first QoS flow, and determine the first expected assistance information based on the second scheduling resource. In addition, the first RAN may determine, in the second time window, the fourth scheduling resource corresponding to the second scheduling resource as a scheduling resource of the second QoS flow, and determine the second expected assistance information based on the fourth scheduling resource.

The first time interval includes, for example, a time interval between time at which the first QoS flow arrives at an ingress of the first RAN, time at which the first QoS flow arrives at the second UE from the first RAN, and time at which the second QoS flow arrives at an egress of the second UE. In other words, because time at which the first QoS flow arrives at the first RAN is associated with time at which the second QoS flow arrives at the second UE, the first RAN may comprehensively determine expected assistance information for the two QoS flows, so that the determined expected assistance information meets transmission statuses of the two QoS flows.

Expected assistance information of a QoS flow determined by the first RAN is time information that is of the QoS flow and that is related to the RAN, and may indicate a transmission occasion expected by the first RAN for the QoS flow, to be specific, indicate time at which the first RAN expects the QoS flow to arrive at the first RAN or the UE. Optionally, the first expected assistance information may include expected BAT information of the first QoS flow (or represented as expected BAT information that is of the first QoS flow and that is related to the RAN). The expected BAT information of the first QoS flow includes, for example, expected BAT of the first QoS flow, range information of the expected BAT of the first QoS flow (or represented as range information of expected BAT that is of the first QoS flow and that is related to the RAN), an offset of expected burst arrival time of the first QoS flow (or represented as an offset of expected burst arrival time that is of the first QoS flow and that is related to the RAN), or range information of the offset of the expected burst arrival time of the first QoS flow (or represented as range information of the offset of the expected burst arrival time that is of the first QoS flow and that is related to the RAN). Optionally, an offset of the burst arrival time of the first QoS flow is, for example, an offset (offset) between the expected BAT of the first QoS flow and estimated BAT of the first QoS flow. The estimated BAT of the first QoS flow is, for example, the BAT indicated by the assistance information 1. Alternatively, an offset of the burst arrival time of the first QoS flow is, for example, an offset between the expected BAT of the first QoS flow and original BAT of the first QoS flow. The original BAT of the first QoS flow is, for example, BAT of a data packet that is carried in the first QoS flow and that has been received by the first RAN. This is equivalent to that the first RAN may determine actual BAT of the first QoS flow based on the received data packet. The offset of the burst arrival time of the first QoS flow may indicate an offset between the expected BAT and the actual BAT.

For content included in the second expected assistance information, refer to the descriptions of the first expected assistance information. An information type included in the second expected assistance information may be consistent with an information type included in the first expected assistance information. For example, both the second expected assistance information and the first expected assistance information include an offset of expected burst arrival time of a QoS flow, or both include expected BAT of the QoS flow. Alternatively, the two pieces of expected assistance information may include different information types. This is not specifically limited.

S507: The first RAN sends the first expected assistance information and the second expected assistance information to the SMF. Correspondingly, the SMF receives the first expected assistance information and the second expected assistance information from the first RAN.

S508: The SMF determines first expected time information and second expected time information. The first expected time information may indicate an expected transmission occasion of the first service flow, or indicate an expected occasion for transmitting the first service flow. The second expected time information may indicate an expected transmission occasion of the second service flow, or indicate an expected occasion for transmitting the second service flow. The expected time information is, for example, represented as expected BAT information.

For example, the SMF determines the first expected time information and the second expected time information based on third expected assistance information and fourth expected assistance information.

Optionally, the third expected assistance information is, for example, the first expected assistance information, and the fourth expected assistance information is, for example, the second expected assistance information. In this case, the SMF may determine the first expected time information based on the first expected assistance information, and determine the second expected time information based on the second expected assistance information. The following describes a manner in which the SMF determines the first expected time information based on the first expected assistance information. It can be learned from the foregoing descriptions that the first expected assistance information may include different content, and correspondingly, the SMF may determine the first expected time information in different manners. The following separately describes the manners.
1. The first expected assistance information includes the expected BAT of the first QoS flow, or includes the range information of the expected BAT of the first QoS flow.

If the first service flow transmitted by using the first QoS flow is a downlink service flow, the SMF may determine the first expected time information based on the first expected assistance information and the CN PDB. For example, the expected time information=the first expected assistance information-the CN PDB.

If the first service flow transmitted by using the first QoS flow is an uplink service flow, the SMF may determine the first expected time information based on the first expected assistance information and the UE-DS-TT residence time. For example, the expected time information=the first expected assistance information-(the UE-DS-TT residence time). Optionally, when determining the first expected time information, the SMF may further consider the AN PDB. For example, the expected time information=the first expected assistance information-(the UE-DS-TT residence time)-the AN PDB.

Optionally, the foregoing obtained expected time information is based on the 5GS clock. The SMF may convert, based on a time deviation (and/or a clock drift) between the 5GS clock and a TSN clock, the expected time information into expected time information that is based on the TSN clock. The converted expected time information is, for example, the first expected time information. Alternatively, if the SMF does not need to perform clock conversion (for example, the 5GS clock is synchronized with a TSN clock), the expected time information before conversion is, for example, the first expected time information.

The SMF may convert, based on the time deviation (and/or the clock drift) between the 5GS clock and the TSN clock, the first expected assistance information that is based on the 5GS clock into first expected assistance information that is based on the TSN clock. The converted first expected assistance information may be used as the first expected time information. Alternatively, if the SMF does not need to perform clock conversion (for example, the 5GS clock is synchronized with the TSN clock), the first expected assistance information before conversion is, for example, the first expected time information.

2. The first expected assistance information includes the offset of the expected burst arrival time of the first QoS flow, or includes the range information of the offset of the expected BAT burst arrival time of the first QoS flow. In this case, the SMF may determine the first expected assistance information as the first expected time information.

A manner in which the SMF determines the second expected time information based on the second expected assistance information is similar to a manner in which the SMF determines the first expected time information based on the first expected assistance information. Details are not described again.

Optionally, in another implementation, the SMF may further obtain fifth expected time information based on the first expected time information, the second expected time information, and the association information between the first UE and the second UE (or a matching relationship between the first QoS flow and the second QoS flow), where the fifth expected time information may indicate an expected transmission occasion of the third service flow. For example, the fifth expected time information includes the first expected time information and the second expected time information. Alternatively, the fifth expected time information includes only one piece of expected time information, and the expected time information is determined based on the first expected time information and the second expected time information. For example, the first expected time information indicates the offset of the expected burst arrival time of the first QoS flow, and the second expected time information indicates the offset of the expected burst arrival time of the second QoS flow. It can be learned from the foregoing content that because the first QoS flow matches the second QoS flow, the offsets of the two types of burst arrival time should be the same. Therefore, the fifth expected time information needs to include only the first expected time information or the second expected time information, that is, needs to include only the offset of one of the two types of expected burst time.

S509: The SMF sends the first expected time information and the second expected time information to the TSN AF via the PCF. For example, the SMF may send the first expected time information and the second expected time information to the TSN AF via the PCF. Correspondingly, the TSN AF may receive the first expected time information and the second expected time information via the PCF.

If the SMF does not determine the fifth expected time information in S508, the SMF may send the first expected time information and the second expected time information to the TSN AF.

Alternatively, if the SMF determines the fifth expected time information in S508, S509 may be replaced with the following: The SMF sends the fifth expected time information to the TSN AF via the PCF. For example, the SMF may send the fifth expected time information to the TSN AF via the PCF. Correspondingly, the TSN AF may receive the fifth expected time information via the PCF.

S510: The TSN AF sends the fifth expected time information to the CNC. Correspondingly, the CNC receives the fifth expected time information from the TSN AF.

If the TSN AF receives the first expected time information and the second expected time information from the SMF, the TSN AF may determine the expected transmission occasion of the first service flow based on the first expected time information, determine the expected transmission occasion of the second service flow based on the second expected time information, and determine the expected transmission occasion of the third service flow based on the association information between the first UE and the second UE. For example, the expected transmission occasion of the third service flow includes the expected transmission occasion of the first service flow and the expected transmission occasion of the second service flow. The TSN AF may determine the fifth expected time information based on the expected transmission occasion of the third service flow, and the fifth expected time information may indicate the expected transmission occasion of the third service flow.

For example, the fifth expected time information includes the first expected time information and the second expected time information, and the fifth expected time information further indicates a correspondence between the first expected time information and the second expected time information and an uplink/downlink. For example, the first expected time information is used for an uplink service flow, and the second expected time information is used for a downlink service flow; or the first expected time information is used for a downlink service flow, and the second expected time information is used for an uplink service flow. For example, if the first expected time information is used for an uplink service flow, and the second expected time information is used for a downlink service flow, an uplink expected transmission occasion of the third service flow is an expected transmission occasion indicated by the first expected time information, and a downlink expected transmission occasion of the third service flow is an expected transmission occasion indicated by the second expected time information.

For another example, if the fifth expected time information includes one piece of expected time information, an uplink expected transmission occasion of the third service flow is an expected transmission occasion indicated by the fifth expected time information, and a downlink expected transmission occasion of the third service flow is also the expected transmission occasion indicated by the fifth expected time information.

Alternatively, if the TSN AF receives the fifth expected time information from the SMF, the TSN AF may directly send the fifth expected time information to the CNC.

In addition, if the TSN AF is replaced with the TSCTSF, a receiving end of the first expected time information and the second expected time information (or the fifth expected time information) is, for example, the AF.

S511: The CNC sends first time information and second time information to the TSN AF. Correspondingly, the TSN AF receives the first time information and the second time information from the CNC. The first time information may indicate a transmission occasion of the first service flow, and the second time information may indicate a transmission occasion of the second service flow. The time information herein is, for example, BAT information.

After receiving the fifth expected time information, the CNC may update the BAT information originally allocated to the first service flow and the second service flow, for example, update the BAT information indicated by the service forwarding information in S501. The CNC may determine the first time information and the second time information. The first time information includes, for example, update time information of the first service flow, and the update time information of the first service flow includes, for example, updated BAT of the first service flow, range information of updated BAT information of the first service flow, an offset of the updated burst arrival time of the first service flow, or range information of the offset of the updated burst arrival time of the first service flow. The offset of the updated burst arrival time of the first service flow is, for example, an offset between the updated burst arrival time of the first service flow and estimated burst arrival time of the first service flow (for example, the BAT of the first service flow indicated by the service forwarding information in S501), or an offset between the updated burst arrival time of the first service flow and the original burst arrival time of the first service flow. The original burst arrival time of the first QoS flow is, for example, burst arrival time of a data packet that is carried in the first QoS flow and that has been received by the first RAN. Content included in the second time information is similar, and details are not described again.

In addition, if the TSN AF is replaced with the TSCTSF, a transmitting end of the first time information and the second time information is, for example, the AF, and the TSCTSF may obtain the first time information and the second time information from the AF via the NEF.

S512: The TSN AF sends second information to the PCF. Correspondingly, the PCF receives the second information from the TSN AF.

The second information includes, for example, a third TSC assistance container and a fourth TSC assistance container. The third TSC assistance container includes update information of the first service flow, and the fourth TSC assistance container includes update information of the second service flow. The update information of the first service flow includes, for example, one or more of the following: the first time information, the periodicity of the first service flow, or the direction information of the first service flow. Similarly, the update information of the second service flow includes, for example, one or more of the following: the second time information, the periodicity of the second service flow, or the direction information of the second service flow.

S513: The PCF sends a third PCC rule and a fourth PCC rule to the SMF. Correspondingly, the SMF receives the third PCC rule and the fourth PCC rule from the PCF.

The PCF may generate the third PCC rule for the first service flow and the fourth PCC rule for the second service flow based on the second information obtained from the TSN AF. The third PCC rule may include the third TSC assistance container, and the fourth PCC rule may include the fourth TSC assistance container. The PCF may send the third PCC rule and the fourth PCC rule to the SMF.

S514: The SMF sends assistance information 3 and assistance information 4 to the first RAN. Correspondingly, the first RAN receives the assistance information 3 and the assistance information 4 from the SMF.

For example, the SMF may determine the assistance information 3 based on the third TSC assistance container included in the third PCC rule, and determine the assistance information 4 based on the fourth TSC assistance container included in the fourth PCC rule. For example, the assistance information 3 is also referred to as first assistance information, and the assistance information 4 is also referred to as second assistance information. The assistance information 3 may indicate a transmission occasion of the first QoS flow, for example, indicate BAT of the first QoS flow, indicate a time range of the BAT of the first QoS flow, indicate an offset of the burst arrival time of the first QoS flow, or indicate a time range of the offset of the burst arrival time of the first QoS flow. The assistance information 4 may indicate a transmission occasion of the second QoS flow, for example, indicate BAT of the second QoS flow, indicate a time range of the BAT of the second QoS flow, indicate an offset of the burst arrival time of the second QoS flow, or indicate a time range of the offset of the burst arrival time of the second QoS flow. An offset of burst arrival time of a QoS flow is, for example, an offset between updated burst arrival time of the QoS flow and estimated burst arrival time. For example, the estimated burst arrival time of the first QoS flow is the BAT indicated by the assistance information 1, and estimated burst arrival time of the second QoS flow is the BAT indicated by the assistance information 2.

The first RAN may determine the transmission occasion of the first QoS flow based on the assistance information 3, for example, may determine time at which the first QoS flow arrives at the first RAN, or determine a time range in which the first QoS flow arrives at the first RAN. Based on the transmission occasion of the first QoS flow, the first RAN may schedule a corresponding resource for the first QoS flow, or the first RAN may determine a scheduling resource of the first QoS flow to transmit the first QoS flow. For example, the scheduling resource is referred to as a fifth scheduling resource. A time domain resource included in the fifth scheduling resource is, for example, consistent with the transmission occasion indicated by the assistance information 3. For example, the time domain resource included in the fifth scheduling resource is the same as the transmission occasion indicated by the assistance information 3. Alternatively, a time interval between the time domain resource included in the fifth scheduling resource and the transmission occasion indicated by the assistance information 3 is less than a first threshold, so that after the first QoS flow arrives at the first RAN or the UE, the first QoS flow can be transmitted in time. Similarly, the first RAN may determine the transmission occasion of the second QoS flow based on the assistance information 4. Based on the transmission occasion of the second QoS flow, the first RAN may determine a scheduling resource of the second QoS flow. For example, the scheduling resource is referred to as a sixth scheduling resource. A time domain resource included in the sixth scheduling resource may also be consistent with the transmission occasion indicated by the assistance information 4.

In this embodiment of this application, the RAN determines the assistance information 3 and the assistance information 4 based on a resource that has no conflict. Therefore, if the RAN respectively determines scheduling resources for the two QoS flows based on the assistance information 3 and the assistance information 4, the determined scheduling resources may not conflict with other resources. In other words, the assistance information 3 and the assistance information 4 are determined when an association relationship between the two QoS flows is considered, so that time at which the two QoS flows arrive at the ingress of the RAN or the egresses of the UEs is consistent with the scheduling resources determined by the RAN. For example, when one of the QoS flows arrives at the ingress of the RAN or the egress of the UE, a resource scheduled by the RAN for the QoS flow also arrives or is about to arrive. In this manner, the two QoS flows can be transmitted in time, and a transmission delay of the QoS flow is reduced.

In the embodiment shown in FIG. 5, the two QoS flows are transmitted by one RAN. Alternatively, in another case, the first QoS flow and the second QoS flow are separately transmitted by different RANs, as shown in FIG. 4D. For this scenario, an embodiment of this application provides a second communication method. In the method, two RANs may determine expected assistance information of two QoS flows through negotiation. FIG. 6 is a flowchart of the method. In addition to the architecture shown in FIG. 2 or FIG. 3, the method may be further applicable to the architecture shown in FIG. 4D.

S601: A TSN AF obtains service forwarding information.

For more content of S601, refer to S501 in the embodiment shown in FIG. 5.

S602: The TSN AF sends first information to a PCF. Correspondingly, the PCF receives the first information from the TSN AF.

Optionally, the first information may include two TSC assistance containers: a first TSC assistance container and a second TSC assistance container. The first TSC assistance container includes information about a first service flow, and the second TSC assistance container includes information about a second service flow. Optionally, the first information further includes association information, and the association information may indicate that a first UE is associated with a second UE, or indicate that the first UE matches the second UE.

For more content of S602, for example, descriptions of features such as the information about the service flow and the association information, refer to S502 in the embodiment shown in FIG. 5.

S603: The PCF sends a PCC rule to an SMF. Correspondingly, the SMF receives the PCC rule from the PCF. Optionally, the PCC rule may include a first PCC rule and a second PCC rule.

For more content of S603, for example, descriptions of the PCC rule, refer to S503 in the embodiment shown in FIG. 5.

S604: The SMF determines assistance information 1 and assistance information 2.

For more content of S604, refer to S504 in the embodiment shown in FIG. 5.

S605: The SMF sends the assistance information 1 to a first RAN. Correspondingly, the first RAN receives the assistance information 1 from the SMF. In addition, the SMF sends the assistance information 2 to a second RAN. Correspondingly, the second RAN receives the assistance information 2 from the SMF.

In this embodiment of this application, for example, a first QoS flow and a second QoS flow are transmitted by different RANs, the first RAN transmits the first QoS flow, and the second RAN transmits the second QoS flow. Therefore, the assistance information 1 is used by the first RAN, and the SMF may send the assistance information 1 to the first RAN. The assistance information 2 is used by the second RAN, and the SMF may send the assistance information 2 to the second RAN.

Optionally, the SMF may further send information about associated QoS flows to corresponding RANs. For example, the SMF may send information about the second QoS flow to the first RAN, and may send information about the first QoS flow to the second RAN. For one of the RANs, if the RAN receives information about another QoS flow, it can be determined that a QoS flow transmitted by the RAN and the another QoS flow are associated QoS flows. Information about a QoS flow includes, for example, a QFI of the QoS flow, and optionally, may further include access network tunnel information corresponding to a PDU session in which the QoS flow is located, core network tunnel information corresponding to the PDU session in which the QoS flow is located, an identifier of the PDU session in which the QoS flow is located, or the like.

In addition, optionally, the SMF may further send, to corresponding RANs, information about the RANs used to transmit the associated QoS flows. For example, the SMF may send information about the first RAN to the second RAN, and may send information about the second RAN to the first RAN. Information about a RAN includes, for example, an identifier of the RAN, for example, a node ID (node ID) of the RAN. Alternatively, information about a QoS flow may include information about a RAN. For example, the information about the first QoS flow includes the information about the first RAN, and the information about the second QoS flow includes the information about the second RAN. In this case, the SMF only needs to send the information about the corresponding QoS flow to the RAN.

For example, if the SMF sends the assistance information 1 and the information about the second QoS flow to the first RAN, the two types of information may be carried in one message, or may be carried in different messages. A manner in which the SMF sends the information to the second RAN is similar.

S606: The first RAN negotiates with the second RAN to determine expected assistance information of the first QoS flow and the second QoS flow.

In this embodiment of this application, because two QoS flows are transmitted by two RANs, negotiation may be performed between the two RANs, to finally determine expected assistance information of the two QoS flows.

For example, the first RAN may determine fifth expected assistance information based on the assistance information 1. For example, the fifth expected assistance information includes third expected assistance information, or the fifth expected assistance information includes the third expected assistance information and fourth expected assistance information. The third expected assistance information indicates an expected transmission occasion of the first QoS flow, and the fourth expected assistance information indicates an expected transmission occasion of the second QoS flow.

For example, the first RAN may determine a transmission occasion of the first QoS flow based on the assistance information 1, for example, may determine time at which the first QoS flow arrives at the first RAN or the UE, or determine a time range in which the first QoS flow arrives at the first RAN or the UE. Based on the transmission occasion of the first QoS flow, the first RAN may schedule a corresponding resource for the first QoS flow, or the first RAN may determine a scheduling resource of the first QoS flow to transmit the first QoS flow. For example, the scheduling resource determined by the first RAN based on the assistance information 1 is referred to as a first scheduling resource. A time domain resource included in the first scheduling resource is, for example, consistent with the transmission occasion indicated by the assistance information 1. For example, the time domain resource included in the first scheduling resource is the same as the transmission occasion indicated by the assistance information 1. Alternatively, a time interval between a time domain resource included in the first scheduling resource and the transmission occasion indicated by the assistance information 1 is less than a first threshold, so that after the first QoS flow arrives at the first RAN or the UE, the first QoS flow can be transmitted in time.

If the first scheduling resource conflicts with another resource, the first RAN may determine a resource that does not conflict with the another resource, and may use the resource as a scheduling resource of the first QoS flow. For example, the resource is referred to as a second scheduling resource. The first RAN may determine the expected assistance information, for example, referred to as the third expected assistance information, of the first QoS flow based on the second scheduling resource (or based on a time domain location of the second scheduling resource). The third expected assistance information may indicate the expected transmission occasion of the first QoS flow. For example, the transmission occasion indicated by the third expected assistance information matches the second scheduling resource. In this way, when the first QoS flow arrives at the first RAN or the UE, the first QoS flow can be transmitted in time. The another resource is, for example, a scheduling resource determined by the first RAN for another QoS flow (which is a QoS flow other than the first QoS flow). For descriptions of a resource conflict, refer to S506 in the embodiment shown in FIG. 5.

It can be learned from the embodiment shown in FIG. 5 that, for the first QoS flow and the second QoS flow, if the expected assistance information of one of the QoS flows changes, the expected assistance information of the other QoS flow may also change. Therefore, optionally, in addition to determining the third expected assistance information, the first RAN may further determine the expected assistance information for the second QoS flow. For example, the first RAN determines the fourth expected assistance information based on the transmission occasion indicated by the third expected assistance information, where the fourth expected assistance information indicates the expected transmission occasion of the second QoS flow.

Alternatively, if the first scheduling resource does not conflict with another resource, the first RAN does not need to determine the third expected assistance information or the fourth expected assistance information.

The second RAN also receives the assistance information 2 from the SMF. For example, the second RAN may determine a transmission occasion of the second QoS flow based on the assistance information 2, for example, may determine time at which the second QoS flow arrives at the second RAN or the UE, or determine a time range in which the second QoS flow arrives at the second RAN or the UE. Based on the transmission occasion of the second QoS flow, the second RAN may schedule a corresponding resource for the second QoS flow, or the second RAN may determine a scheduling resource of the second QoS flow to transmit the second QoS flow. For example, the scheduling resource determined by the second RAN based on the assistance information 2 is referred to as a third scheduling resource. A time domain resource included in the third scheduling resource is, for example, consistent with the transmission occasion indicated by the assistance information 2. For example, the time domain resource included in the third scheduling resource is the same as the transmission occasion indicated by the assistance information 2. Alternatively, a time interval between a time domain resource included in the third scheduling resource and the transmission occasion indicated by the assistance information 2 is less than a first threshold, so that after the second QoS flow arrives at the second RAN or the UE, the second QoS flow can be transmitted in time.

If the third scheduling resource conflicts with another resource, the second RAN may determine a resource that does not conflict with the another resource, and may use the resource as a scheduling resource of the second QoS flow. For example, the resource is referred to as a fourth scheduling resource. The second RAN may determine the expected assistance information, for example, referred to as expected assistance information 1, of the second QoS flow based on the fourth scheduling resource (or based on a time domain location of the fourth scheduling resource). The expected assistance information 1 may indicate the expected transmission occasion of the second QoS flow. The another resource is, for example, a scheduling resource determined by the second RAN for another QoS flow (which is a QoS flow other than the second QoS flow). For descriptions of the resource conflict, refer to S506 in the embodiment shown in FIG. 5.

Optionally, in addition to determining the expected assistance information 1, the second RAN may further determine the expected assistance information for the first QoS flow. For example, the second RAN determines expected assistance information 2 based on the transmission occasion indicated by the expected assistance information 1, where the expected assistance information 2 indicates the expected transmission occasion of the first QoS flow.

Alternatively, if the third scheduling resource does not conflict with another resource, the second RAN does not need to determine the expected assistance information 1 or the expected assistance information 2.

There may be a plurality of manners for a negotiation process between the first RAN and the second RAN. For example, if a negotiation process is that the first RAN determines the fifth expected assistance information, the first RAN may send the fifth expected assistance information to the second RAN. The fifth expected assistance information includes the third expected assistance information, or includes the third expected assistance information and the fourth expected assistance information. If the fifth expected assistance information includes the third expected assistance information but does not include the fourth expected assistance information, and the second RAN also determines the expected assistance information 2, the second RAN may determine whether the third expected assistance information is consistent with the expected assistance information 2. If the third expected assistance information is consistent with the expected assistance information 2, the second RAN may accept the third expected assistance information. Alternatively, if the fifth expected assistance information includes the third expected assistance information but does not include the fourth expected assistance information, and the second RAN determines the expected assistance information 1 but does not determine the expected assistance information 2, the second RAN may determine whether time indicated by the expected assistance information 1 matches time indicated by the third expected assistance information. If the time indicated by the expected assistance information 1 matches the time indicated by the third expected assistance information, the second RAN may accept the third expected assistance information; or if the time indicated by the expected assistance information 1 does not match the time indicated by the third expected assistance information, the second RAN does not accept the third expected assistance information. Alternatively, if the fifth expected assistance information includes the third expected assistance information but does not include the fourth expected assistance information, and the second RAN does not determine the expected assistance information 1 or the expected assistance information 2, the second RAN may accept the third expected assistance information.

Alternatively, if the fifth expected assistance information includes the third expected assistance information and the fourth expected assistance information, and the second RAN determines the expected assistance information 1 and the expected assistance information 2, the second RAN may determine whether the fourth expected assistance information is consistent with the expected assistance information 1, and determine whether the third expected assistance information is consistent with the expected assistance information 2. If both comparison results indicate that the two types of information are consistent, the second RAN may accept the fifth expected assistance information. If either or both of two comparison results indicate that the two types of information are inconsistent, the second RAN does not accept the fifth expected assistance information. Alternatively, if the fifth expected assistance information includes the third expected assistance information and the fourth expected assistance information, and the second RAN determines the expected assistance information 1 but does not determine the expected assistance information 2, the second RAN may determine whether the fourth expected assistance information is consistent with the expected assistance information 1. If the fourth expected assistance information is consistent with the expected assistance information 1, the second RAN may accept the fifth expected assistance information. Alternatively, if the fifth expected assistance information includes the third expected assistance information and the fourth expected assistance information, and the second RAN does not determine the expected assistance information 1 or the expected assistance information 2, the second RAN may accept the fifth expected assistance information.

If the second RAN accepts the fifth expected assistance information, in this embodiment of this application, the second RAN sends the acknowledgment information to the first RAN. Correspondingly, the first RAN receives the acknowledgment information from the second RAN. The acknowledgment information may indicate that the second RAN accepts the fifth expected assistance information.

Alternatively, if the second RAN does not accept the fifth expected assistance information, the second RAN may send negative acknowledgment information to the first RAN, where the negative acknowledgment information indicates that the second RAN does not accept the fifth expected assistance information. After receiving the negative acknowledgment information, the first RAN may re-determine expected assistance information for the first QoS flow and/or the second QoS flow, and send the re-determined expected assistance information to the second RAN for negotiation, until the first RAN receives the acknowledgment information from the second RAN.

Alternatively, if the second RAN does not accept the fifth expected assistance information, the second RAN may send, to the first RAN, the expected assistance information determined by the second RAN. For example, the expected assistance information determined by the second RAN is referred to as sixth expected assistance information (where the sixth expected assistance information includes the expected assistance information 1, or includes the expected assistance information 1 and the expected assistance information 2). After receiving the sixth expected assistance information, the first RAN may determine whether the sixth expected assistance information can be accepted. For example, the first RAN may determine, based on factors such as the fifth expected assistance information and/or the assistance information 1, whether to accept the sixth expected assistance information. For example, if a difference between time indicated by the sixth expected assistance information and time indicated by the fifth expected assistance information is less than a second threshold, the second RAN may accept the sixth expected assistance information. Alternatively, the first RAN may determine, in another manner, whether to accept the sixth expected assistance information. If the first RAN accepts the sixth expected assistance information, the first RAN may send acknowledgment information to the second RAN, to indicate that the first RAN accepts the sixth expected assistance information. However, if the first RAN does not accept the sixth expected assistance information, the first RAN may send negative acknowledgment information to the second RAN, or send expected assistance information recognized by the first RAN, and so on.

In the foregoing negotiation process, for a QoS flow, a RAN sends one piece of expected assistance information to another RAN, where the expected assistance information may indicate an expected transmission occasion of the QoS flow. Alternatively, in another case, for a QoS flow, a RAN may send a plurality of pieces of expected assistance information to another RAN, where the plurality of pieces of expected assistance information may indicate a plurality of expected transmission occasions of the QoS flow. The another RAN may select one expected transmission occasion from the plurality of expected transmission occasions. For example, the first RAN sends expected assistance information a and expected assistance information b to the second RAN, where both the expected assistance information a and the expected assistance information b indicate transmission occasions of the first QoS flow, and the transmission occasions indicated by the two pieces of expected assistance information are different. The second RAN may determine whether the expected assistance information a is consistent with the expected assistance information 2. If the expected assistance information a is consistent with the expected assistance information 2, the second RAN may accept the expected assistance information a, and does not need to process the expected assistance information b; or if the expected assistance information a is inconsistent with the expected assistance information 2, the second RAN further determines whether the expected assistance information b is consistent with the expected assistance information 2. If the expected assistance information b is consistent with the expected assistance information 2, the second RAN may accept the expected assistance information b; or if the expected assistance information b is also inconsistent with the expected assistance information 2, the second RAN does not accept the expected assistance information b either.

If the second RAN accepts the expected assistance information a or the expected assistance information b, the second RAN may send acknowledgment information to the first RAN, to acknowledge that the second RAN accepts the expected assistance information a or the expected assistance information b. The negotiation process ends. In this embodiment of this application, one piece of acknowledgment information is used to acknowledge that a specific piece of information is accepted. For example, the acknowledgment information may include an identifier of the information, and the identifier of the information indicates to acknowledge that the information is accepted. However, if the second RAN does not accept the expected assistance information a or the expected assistance information b, the second RAN may send, to the first RAN, negative acknowledgment information or expected assistance information recommended by the second RAN for the first QoS flow, to continue the negotiation process. For this, refer to the foregoing descriptions. The recommended expected assistance information that is for the first QoS flow and that is sent by the second RAN may include one or more pieces of expected assistance information.

Alternatively, the first RAN does not send the expected assistance information for the first QoS flow to the second RAN, but sends a plurality of pieces of expected assistance information for the second QoS flow to the second RAN. If the second RAN receives the plurality of pieces of expected assistance information for the second QoS flow, the second RAN may determine whether to accept the corresponding expected assistance information. For a determining manner, refer to the foregoing descriptions.

Alternatively, the first RAN sends a plurality of pieces of expected assistance information for the first QoS flow to the second RAN, and sends a plurality of pieces of expected assistance information for the second QoS flow to the second RAN, where the plurality of pieces of expected assistance information for the second QoS flow indicate expected transmission occasions of the second QoS flow. For example, the first RAN sends the expected assistance information a, the expected assistance information b, expected assistance information c, and expected assistance information d to the second RAN, where both the expected assistance information c and the expected assistance information d indicate transmission occasions of the second QoS flow, and transmission occasions indicated by the two pieces of expected assistance information are different. Optionally, information that is sent by the first RAN to the second RAN and that carries the expected assistance information may include a first indication. The first indication may indicate a correspondence between the expected assistance information and the QoS flows. For example, the expected assistance information a and the expected assistance information b correspond to the first QoS flow, and the expected assistance information c and the expected assistance information d correspond to the second QoS flow. Optionally, the first indication is, for example, a QoS flow identifier, for example, a QFI. Optionally, the information carrying the expected assistance information may further include a second indication, indicating an association relationship between the expected assistance information corresponding to the first QoS flow and the expected assistance information corresponding to the second QoS flow. For example, the second indication may indicate that the expected assistance information a is associated with the expected assistance information c, and the expected assistance information b is associated with the expected assistance information d.

The second RAN may determine whether to accept the expected assistance information a and the expected assistance information c. For a determining manner, refer to the foregoing acknowledgment manner after the second RAN receives the third expected assistance information and the fourth expected assistance information. If the second RAN accepts the expected assistance information a and the expected assistance information c, the second RAN may send acknowledgment information to the first RAN, to acknowledge that the second RAN accepts the expected assistance information a and the expected assistance information c. The negotiation process ends. However, if the second RAN does not accept the expected assistance information a or the expected assistance information c, the second RAN may determine whether to accept the expected assistance information b and the expected assistance information d. For a determining manner, refer to the foregoing descriptions.

If the second RAN accepts the expected assistance information b and the expected assistance information d, the second RAN may send acknowledgment information to the first RAN, to acknowledge that the second RAN accepts the expected assistance information b and the expected assistance information d. The negotiation process ends.

Alternatively, if the second RAN does not accept the expected assistance information b or the expected assistance information d, the second RAN may send, to the first RAN, negative acknowledgment information or expected assistance information recommended by the second RAN. For this, refer to the foregoing descriptions. The recommended expected assistance information sent by the second RAN may include one or more pieces of expected assistance information corresponding to the first QoS flow, and/or include one or more pieces of expected assistance information corresponding to the second QoS flow. After receiving the negative acknowledgment information or the recommended expected assistance information, the first RAN may continue to negotiate the expected assistance information of the first QoS flow and the second QoS flow with the second RAN. For a negotiation process, refer to the foregoing descriptions.

Alternatively, if the second RAN accepts the expected assistance information a or the expected assistance information b, but does not accept the expected assistance information c or the expected assistance information d, the second RAN may send third information to the first RAN. The third information may indicate that the second RAN accepts the expected assistance information a or the expected assistance information b, but does not accept the expected assistance information c or the expected assistance information d. After receiving the third information, the first RAN may continue to negotiate the expected assistance information of the second QoS flow with the second RAN. For a negotiation process, refer to the foregoing descriptions.

Alternatively, if the second RAN accepts the expected assistance information c or the expected assistance information d, but does not accept the expected assistance information a or the expected assistance information b, a processing manner is similar to the foregoing manner.

In conclusion, it can be learned that a negotiation process between the first RAN and the second RAN may be completed by using one or more steps. This is not specifically limited. After the negotiation between the first RAN and the second RAN is completed (for example, if a RAN receives acknowledgment information from another RAN, it indicates that the negotiation is completed), the expected assistance information of the first QoS flow and the expected assistance information of the second QoS flow may be finally determined. In this embodiment of this application, for example, the finally determined expected assistance information of the first QoS flow is the third expected assistance information, and the finally determined expected assistance information of the second QoS flow is the fourth expected assistance information.

S607: The first RAN sends the fifth expected assistance information to the SMF. Correspondingly, the SMF receives the fifth expected assistance information from the first RAN.

For example, the first RAN may send the third expected assistance information to the SMF, and the second RAN may send the fourth expected assistance information to the SMF; the first RAN may send the third expected assistance information and the fourth expected assistance information to the SMF, and the second RAN does not need to send the expected assistance information to the SMF; or the second RAN may send the third expected assistance information and the fourth expected assistance information to the SMF, and the first RAN does not need to send the expected assistance information to the SMF. In S608, that the first RAN sends the fifth expected assistance information to the SMF is used as an example.

S608: The SMF determines first expected time information and second expected time information.

For more content of S608, refer to S508 in the embodiment shown in FIG. 5.

S609: The SMF sends the first expected time information and the second expected time information to the TSN AF.

For more content of S609, refer to S509 in the embodiment shown in FIG. 5.

S610: The TSN AF sends the fifth expected time information to a CNC. Correspondingly, the CNC receives the fifth expected time information from the TSN AF.

For more content of S610, refer to S510 in the embodiment shown in FIG. 5.

S611: The CNC sends first time information and second time information to the TSN AF. Correspondingly, the TSN AF receives the first time information and the second time information from the CNC.

For more content of S611, refer to S511 in the embodiment shown in FIG. 5.

S612: The TSN AF sends second information to the PCF. Correspondingly, the PCF receives the second information from the TSN AF.

For more content of S612, refer to S512 in the embodiment shown in FIG. 5.

S613: The PCF sends a third PCC rule and a fourth PCC rule to the SMF. Correspondingly, the SMF receives the third PCC rule and the fourth PCC rule from the PCF.

For more content of S613, refer to S513 in the embodiment shown in FIG. 5.

S614: The SMF sends assistance information 3 to the first RAN. Correspondingly, the first RAN receives the assistance information 3 from the SMF. In addition, the SMF sends assistance information 4 to the second RAN. Correspondingly, the second RAN receives the assistance information 4 from the SMF.

For more content of S614, refer to S514 in the embodiment shown in FIG. 5.

In this embodiment of this application, an association relationship between two QoS flows is considered when the assistance information 3 and the assistance information 4 are determined. Therefore, scheduling resources determined based on the two pieces of assistance information can meet time at which the two QoS flows arrive at an ingress of the RAN or egresses of the UEs. In addition, the fifth scheduling resource determined based on the first assistance information does not conflict with another scheduling resource, and the sixth scheduling resource determined based on the second assistance information does not conflict with the another scheduling resource. Therefore, normal transmission of the first QoS flow and the second QoS flow can be ensured. When two RANs transmit two QoS flows, in this embodiment of this application, negotiation between the RANs can be implemented, thereby helping determine expected assistance information that can be recognized by both the two RANs.

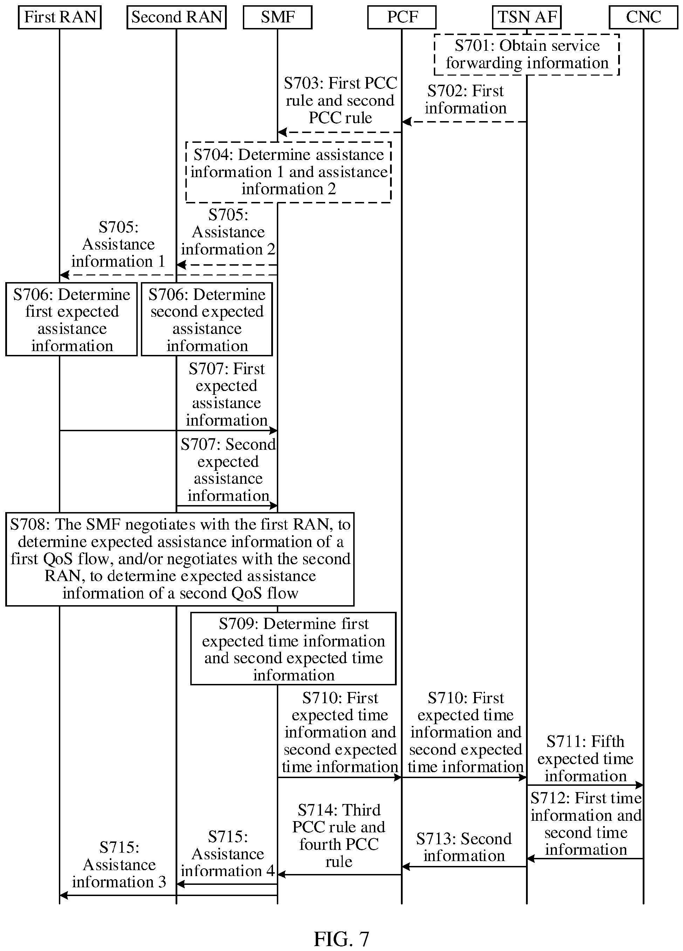

For a scenario in which the first QoS flow and the second QoS flow are transmitted by different RANs, the expected assistance information of the QoS flows may be further determined in another manner. An embodiment of this application provides a third communication method. In the method, an SMF and two RANs may determine expected assistance information of two QoS flows through negotiation. FIG. 7 is a flowchart of the method. In addition to the architecture shown in FIG. 2 or FIG. 3, the method may be further applicable to the architecture shown in FIG. 4D.

S701: A TSN AF obtains service forwarding information.

For more content of S701, refer to S501 in the embodiment shown in FIG. 5.

S702: The TSN AF sends first information to a PCF. Correspondingly, the PCF receives the first information from the TSN AF.

For more content of S702, refer to S502 in the embodiment shown in FIG. 5.

S703: The PCF sends a PCC rule to an SMF. Correspondingly, the SMF receives the PCC rule from the PCF. Optionally, the PCC rule may include a first PCC rule and a second PCC rule.

For more content of S703, for example, descriptions of the PCC rule, refer to S503 in the embodiment shown in FIG. 5.

S704: The SMF determines assistance information 1 and assistance information 2.

For more content of S704, refer to S504 in the embodiment shown in FIG. 5.

S705: The SMF sends the assistance information 1 to a first RAN. Correspondingly, the first RAN receives the assistance information 1 from the SMF. In addition, the SMF sends the assistance information 2 to a second RAN. Correspondingly, the second RAN receives the assistance information 2 from the SMF.

S706: The first RAN determines first expected assistance information. In addition, the second RAN determines second expected assistance information.

In this embodiment of this application, because the two RANs may not know that QoS flows transmitted by the two RANs are associated with another QoS flow, the two RANs only need to determine expected assistance information of the QoS flows transmitted by the two RANs.

For a process in which the first RAN determines the first expected assistance information, refer to S605 in the embodiment shown in FIG. 5. For a process in which the second RAN determines the second expected assistance information, also refer to S505 in the embodiment shown in FIG. 5. However, in this embodiment of this application, the first RAN does not need to consider a second QoS flow when determining the first expected assistance information, and the second RAN also does not need to consider a first QoS flow when determining the first expected assistance information.

In addition, that determining processes of the first RAN and the second RAN are placed in one step does not mean that the two steps are necessarily performed at the same time. During actual application, the process in which the first RAN determines the first expected assistance information may be performed first, or the process in which the second RAN determines the second expected assistance information may be performed first, or the two processes may be performed at the same time.

S707: The first RAN sends the first expected assistance information to the SMF. Correspondingly, the SMF receives the first expected assistance information from the first RAN. In addition, the second RAN sends the second expected assistance information to the SMF. Correspondingly, the SMF receives the second expected assistance information from the second RAN.

That sending processes of the first RAN and the second RAN are placed in one step does not mean that the two steps are necessarily performed at the same time. During actual application, the process in which the first RAN sends the first expected assistance information may be performed first, or the process in which the second RAN sends the second expected assistance information may be performed first, or the two processes may be performed at the same time.

S708: The SMF negotiates with the first RAN, to determine expected assistance information of the first QoS flow, and/or negotiates with the second RAN, to determine expected assistance information of the second QoS flow.

Because neither the first RAN nor the second RAN knows that the first QoS flow is associated with the second QoS flow, time (or a transmission occasion) indicated by the first expected assistance information may match or may not match time (or a transmission occasion) indicated by the second expected assistance information. Matching of the two types of time (or matching of the two transmission occasions) is, for example, that the two types of time have a same offset relative to respective estimated transmission occasions. For example, if a transmission occasion of the first QoS flow indicated by the first expected assistance information has a first offset relative to an estimated transmission occasion of the first QoS flow, and a transmission occasion of the second QoS flow indicated by the second expected assistance information also has the first offset relative to an estimated transmission occasion of the second QoS flow, it indicates that the time indicated by the first expected assistance information matches the time indicated by the second expected assistance information. Alternatively, if a transmission occasion of the first QoS flow indicated by the first expected assistance information has a first offset relative to an estimated transmission occasion of the first QoS flow, and a transmission occasion of the second QoS flow indicated by the second expected assistance information has a second offset relative to an estimated transmission occasion of the second QoS flow, where the second offset is different from the first offset, it indicates that the time indicated by the first expected assistance information does not match the time indicated by the second expected assistance information. Alternatively, if a transmission occasion of the first QoS flow indicated by the first expected assistance information has a third offset relative to an estimated transmission occasion of the first QoS flow, and a transmission occasion of the second QoS flow indicated by the second expected assistance information has a first offset relative to an estimated transmission occasion of the second QoS flow, where the third offset is different from the first offset, it indicates that the time indicated by the first expected assistance information does not match the time indicated by the second expected assistance information.

If the time indicated by the first expected assistance information matches the time indicated by the second expected assistance information, the SMF may accept the first expected assistance information and the second expected assistance information, and S708 does not need to be performed. However, if the time indicated by the first expected assistance information does not match the time indicated by the second expected assistance information, the SMF may not accept the first expected assistance information and/or the second expected assistance information. In this case, S708 may be performed. In other words, the SMF may determine, based on the expected assistance information from the first RAN, whether to accept the expected assistance information from the second RAN, or may determine, based on the expected assistance information from the second RAN, whether to accept the expected assistance information from the first RAN. In other words, the SMF determines, based on the expected assistance information from the first RAN and the expected assistance information from the second RAN, whether the expected assistance information can be accepted.

For example, if the SMF determines that the time indicated by the first expected assistance information does not match the time indicated by the second expected assistance information, in S708, the SMF may re-determine expected assistance information for the first QoS flow and/or the second QoS flow. For example, the SMF determines that the expected assistance information of the first QoS flow continues to be the first expected assistance information, determines time that matches the time indicated by the first expected assistance information (where for descriptions of "time matching", refer to the foregoing descriptions), and then determines expected assistance information, for example, referred to as expected assistance information 3, for the second QoS flow based on the time that matches the time indicated by the first expected assistance information. In this case, because the first expected assistance information does not change, the SMF may not need to negotiate with the first RAN, and may negotiate only with the second RAN, to determine the expected assistance information of the second QoS flow.

For another example, the SMF determines that the expected assistance information of the second QoS flow continues to be the second expected assistance information, determines time that matches the time indicated by the second expected assistance information, and then determines expected assistance information, for example, referred to as expected assistance information 4, for the first QoS flow based on the time that matches the time indicated by the second expected assistance information. In this case, because the second expected assistance information does not change, the SMF may not need to negotiate with the second RAN, and may negotiate only with the first RAN, to determine the expected assistance information of the first QoS flow.

For still another example, the SMF may re-determine expected assistance information, for example, referred to as expected assistance information 4, for the first QoS flow. The SMF determines time that matches time indicated by the expected assistance information 4, and then determines expected assistance information, for example, referred to as expected assistance information 3, for the second QoS flow based on the time that matches the time indicated by the expected assistance information 4. In this case, the SMF may negotiate with the first RAN, to determine the expected assistance information of the first QoS flow, and negotiate with the second RAN, to determine the expected assistance information of the second QoS flow.

For yet another example, the SMF may re-determine expected assistance information, for example, referred to as expected assistance information 3, for the second QoS flow. The SMF determines time that matches time indicated by the expected assistance information 3, and then determines expected assistance information, for example, referred to as expected assistance information 4, for the first QoS flow based on the time that matches the time indicated by the expected assistance information 3. In this case, the SMF may negotiate with the first RAN, to determine the expected assistance information of the first QoS flow, and negotiate with the second RAN, to determine the expected assistance information of the second QoS flow.

For example, the SMF determines the expected assistance information 4 of the first QoS flow, and the SMF may send the expected assistance information 4 to the first RAN. After receiving the expected assistance information 4, the first RAN may determine whether to accept the expected assistance information 4. For example, if a scheduling resource determined based on the time indicated by the expected assistance information 4 does not conflict with another scheduling resource, the first RAN may accept the expected assistance information 4; otherwise, the first RAN does not accept the expected assistance information 4. If the first RAN accepts the expected assistance information 4, the first RAN may send acknowledgment information to the SMF, to indicate that the first RAN accepts the expected assistance information 4. However, if the first RAN does not accept the expected assistance information 4, the first RAN may send negative acknowledgment information to the SMF, to indicate that the first RAN does not accept the expected assistance information 4. After receiving the negative acknowledgment information, the SMF may re-determine expected assistance information, for example, referred to as expected assistance information 5, for the first QoS flow (this may involve a case in which the SMF also needs to re-determine expected assistance information for the second QoS flow, and further negotiate with the second RAN). The SMF may then send the expected assistance information 5 to the first RAN, to continue to negotiate with the first RAN, until the acknowledgment information is received from the first RAN, or until an upper limit of negotiation duration is reached.

Alternatively, if the first RAN does not accept the expected assistance information 4, the first RAN may send, to the SMF, expected assistance information, for example, referred to as expected assistance information 6, recognized by the first RAN. The SMF may determine whether to accept the expected assistance information 6. For example, the SMF may determine whether time indicated by the expected assistance information 6 matches time indicated by current expected assistance information of the second QoS flow. If the time indicated by the expected assistance information 6 matches the time indicated by the current expected assistance information of the second QoS flow, the SMF may accept the expected assistance information 6; otherwise, the SMF does not accept the expected assistance information 6. If the SMF accepts the expected assistance information 6, the SMF may send acknowledgment information to the first RAN, to indicate that the SMF accepts the expected assistance information 6. A negotiation process between the SMF and the first RAN ends. Alternatively, if the SMF does not accept the expected assistance information 6, the SMF may send, to the first RAN, negative acknowledgment information, expected assistance information recognized by the SMF, or the like, to continue the negotiation, until the acknowledgment information is received from the first RAN, or until an upper limit of negotiation duration is reached.

In the foregoing negotiation process, for a QoS flow, the SMF sends one piece of expected assistance information to the RAN, where the expected assistance information may indicate an expected transmission occasion of the QoS flow. Alternatively, in another case, for a QoS flow, the SMF may send a plurality of pieces of expected assistance information to the RAN, where the plurality of pieces of expected assistance information may indicate a plurality of expected transmission occasions of the QoS flow. The RAN may select one expected transmission occasion from the plurality of expected transmission occasions. For example, the SMF sends expected assistance information e and expected assistance information f to the first RAN, where both the expected assistance information e and the expected assistance information f indicate transmission occasions of the first QoS flow, and the transmission occasions indicated by the two pieces of expected assistance information are different. The first RAN may determine whether to accept the expected assistance information e. For a determining manner, refer to the foregoing descriptions. If the expected assistance information e is accepted, the expected assistance information f may not need to be processed; or if the expected assistance information e is not accepted, the first RAN may further determine whether to accept the expected assistance information f.

If the first RAN accepts the expected assistance information e or the expected assistance information f, the first RAN may send acknowledgment information to the SMF, to acknowledge that the first RAN accepts the expected assistance information e or the expected assistance information f. The negotiation process ends. However, if the first RAN does not accept the expected assistance information e or the expected assistance information f, the first RAN may send, to the SMF, negative acknowledgment information or expected assistance information recommended by the first RAN for the first QoS flow, to continue the negotiation process. For this, refer to the foregoing descriptions. The recommended expected assistance information that is for the first QoS flow and that is sent by the first RAN may include one or more pieces of expected assistance information, and the SMF may separately process the plurality of pieces of expected assistance information.

Alternatively, in the negotiation process, for a QoS flow, the RAN may send a plurality of pieces of expected assistance information to the SMF, where the plurality of pieces of expected assistance information may indicate a plurality of expected transmission occasions of the QoS flow. The SMF may select one expected transmission occasion from the plurality of expected transmission occasions. In other words, in S707, the first RAN may send one or more pieces of expected assistance information to the SMF, where the first expected assistance information is one of the one or more pieces of expected assistance information; and the second RAN may also send one or more pieces of expected assistance information to the SMF, where the second expected assistance information is one of the one or more pieces of expected assistance information. For example, in S707, the first RAN sends expected assistance information g and expected assistance information h to the SMF, where the expected assistance information g is, for example, the first expected assistance information. Both the expected assistance information g and the expected assistance information h indicate transmission occasions of the first QoS flow, and the transmission occasions indicated by the two pieces of expected assistance information are different. The SMF may determine whether to accept the expected assistance information g. If the SMF receives a plurality of pieces of expected assistance information from the second RAN, the SMF may determine, based on the plurality of pieces of expected assistance information, whether to accept the expected assistance information g. The SMF determines to accept the expected assistance information g, provided that it is determined, based on one of the plurality of pieces of expected assistance information, that the expected assistance information g can be accepted. The SMF determines, based on a piece of expected assistance information from the second RAN, whether the expected assistance information g can be accepted. For a determining manner, refer to the foregoing descriptions (for example, if a transmission occasion indicated by the piece of expected assistance information from the second RAN is the same as a transmission occasion indicated by the expected assistance information g, the SMF may accept the expected assistance information g). If the SMF accepts the expected assistance information g, the expected assistance information h may not need to be processed; or if the SMF does not accept the expected assistance information g, the SMF may further determine, in a similar manner, whether to accept the expected assistance information h.

If the SMF accepts the expected assistance information g or the expected assistance information h, the SMF may send acknowledgment information to the first RAN, to acknowledge that the SMF accepts the expected assistance information g or the expected assistance information h. The negotiation process ends. However, if the SMF does not accept the expected assistance information g or the expected assistance information h, the SMF may send, to the first RAN, negative acknowledgment information or expected assistance information recommended by the SMF for the first QoS flow, to continue the negotiation process. For this, refer to the foregoing descriptions. The recommended expected assistance information that is for the first QoS flow and that is sent by the SMF may include one or more pieces of expected assistance information, and the first RAN may separately process the plurality of pieces of expected assistance information.

In S708, negotiation processes between the SMF and the two RANs are similar, and the negotiation process between the SMF and the second RAN is not described again.

In this embodiment of this application, for example, the expected assistance information of the first QoS flow finally determined by the SMF and the first RAN through negotiation is referred to as third expected assistance information, and the expected assistance information of the second QoS flow finally determined by the SMF and the second RAN through negotiation is referred to as fourth expected assistance information.

S709: The SMF determines first expected time information and second expected time information. After determining the third expected assistance information and the fourth expected assistance information, the SMF may determine the first expected time information and the second expected time information.

For more content of S709, refer to S508 in the embodiment shown in FIG. 5.

S710: The SMF sends the first expected time information and the second expected time information to the TSN AF.

For more content of S710, refer to S509 in the embodiment shown in FIG. 5.

S711: The TSN AF sends fifth expected time information to a CNC. Correspondingly, the CNC receives the fifth expected time information from the TSN AF.

For more content of S711, refer to S510 in the embodiment shown in FIG. 5.

S712: The CNC sends first time information and second time information to the TSN AF. Correspondingly, the TSN AF receives the first time information and the second time information from the CNC.

For more content of S712, refer to S511 in the embodiment shown in FIG. 5.

S713: The TSN AF sends second information to the PCF. Correspondingly, the PCF receives the second information from the TSN AF.

For more content of S713, refer to S512 in the embodiment shown in FIG. 5.

S714: The PCF sends a third PCC rule and a fourth PCC rule to the SMF. Correspondingly, the SMF receives the third PCC rule and the fourth PCC rule from the PCF.

For more content of S714, refer to S513 in the embodiment shown in FIG. 5.

S715: The SMF sends assistance information 3 to the first RAN. Correspondingly, the first RAN receives the assistance information 3 from the SMF. In addition, the SMF sends assistance information 4 to the second RAN. Correspondingly, the second RAN receives the assistance information 4 from the SMF.

For more content of S715, refer to S514 in the embodiment shown in FIG. 5.

In this embodiment of this application, an association relationship between two QoS flows is considered when the assistance information 3 and the assistance information 4 are determined. Therefore, scheduling resources determined based on the two pieces of assistance information can meet time at which the two QoS flows arrive at an ingress of the RAN or egresses of the UEs. In addition, a fifth scheduling resource determined based on first assistance information does not conflict with another scheduling resource, and a sixth scheduling resource determined based on second assistance information does not conflict with the another scheduling resource. Therefore, normal transmission of the first QoS flow and the second QoS flow can be ensured. When two RANs transmit two QoS flows, in this embodiment of this application, negotiation between the SMF and the RANs can be implemented, thereby helping determine expected assistance information that can be recognized by both the two RANs. In addition, in a negotiation process between the SMF and the RAN, the SMF, as a core network device, may be dominant to some extent, or may be decision-making to some extent. The RAN may be more inclined to accept expected assistance information recommended by the SMF. This helps shorten the negotiation process and improve service transmission efficiency.

For a scenario in which the first QoS flow and the second QoS flow are transmitted by different RANs, negotiation is implemented between the SMF and the RAN, and negotiation may be further performed between another core network device and the RAN. An embodiment of this application provides a fourth communication method. In the method, a TSN AF and two RANs may determine expected assistance information of two QoS flows through negotiation. FIG. 8 is a flowchart of the method. In addition to the architecture shown in FIG. 2 or FIG. 3, the method may be further applicable to the architecture shown in FIG. 4D.

S801: The TSN AF obtains service forwarding information.

For more content of S801, refer to S501 in the embodiment shown in FIG. 5.

S802: The TSN AF sends first information to a PCF. Correspondingly, the PCF receives the first information from the TSN AF.

For more content of S802, refer to S502 in the embodiment shown in FIG. 5.

S803: The PCF sends a PCC rule to an SMF. Correspondingly, the SMF receives the PCC rule from the PCF. Optionally, the PCC rule may include a first PCC rule and a second PCC rule.

For more content of S803, for example, descriptions of the PCC rule, refer to S503 in the embodiment shown in FIG. 5.

S804: The SMF determines assistance information 1 and assistance information 2.

For more content of S804, refer to S504 in the embodiment shown in FIG. 5.

S805: The SMF sends the assistance information 1 to a first RAN. Correspondingly, the first RAN receives the assistance information 1 from the SMF. In addition, the SMF sends the assistance information 2 to a second RAN. Correspondingly, the second RAN receives the assistance information 2 from the SMF.

S806: The first RAN determines first expected assistance information. In addition, the second RAN determines second expected assistance information.

For more content of S806, refer to S706 in the embodiment shown in FIG. 7.

S807: The first RAN sends the first expected assistance information to the SMF. Correspondingly, the SMF receives the first expected assistance information from the first RAN. In addition, the second RAN sends the second expected assistance information to the SMF. Correspondingly, the SMF receives the second expected assistance information from the second RAN.

S808: The SMF determines first expected time information and second expected time information.

For example, the SMF determines the first expected time information and the second expected time information based on the first expected assistance information and the second expected assistance information.

For more content of S808, refer to S508 in the embodiment shown in FIG. 5.

S809: The SMF sends the first expected time information and the second expected time information to the TSN AF.

For more content of S809, refer to S509 in the embodiment shown in FIG. 5.

S810: The TSN AF negotiates with the first RAN, to determine expected time information corresponding to a first QoS flow, and/or negotiates with the second RAN, to determine expected time information corresponding to a second QoS flow. Expected time information corresponding to a QoS flow may indicate an expected transmission occasion of the QoS flow.

Because neither the first RAN nor the second RAN knows that the first QoS flow is associated with the second QoS flow, time (or a transmission occasion) indicated by the first expected assistance information may match or may not match time (or a transmission occasion) indicated by the second expected assistance information. Correspondingly, the first expected time information and the second expected time information are determined based on the first expected assistance information and the second expected assistance information. In this case, time (or a transmission occasion) indicated by the first expected time information may match or may not match time (or a transmission occasion) indicated by the second expected time information. For descriptions of matching between the two types of time (or the two transmission occasions), refer to the embodiment shown in FIG. 7.

If the time indicated by the first expected time information matches the time indicated by the second expected time information, the TSN AF accepts the first expected time information and the second expected time information, and S810 does not need to be performed. However, if the time indicated by the first expected time information does not match the time indicated by the second expected time information, S810 may be performed.

If the time indicated by the first expected time information does not match the time indicated by the second expected time information, the TSN AF may not accept the first expected time information and/or the second expected time information. In S810, the TSN AF may re-determine corresponding time information for the first QoS flow and/or the second QoS flow. For this part of content, refer to S708 in the embodiment shown in FIG. 7. A difference between this embodiment of this application and S708 is a negotiation process between the TSN AF and the RAN. The negotiation process is slightly different from the negotiation process between the SMF and the RAN. Therefore, the following describes the negotiation process between the TSN AF and the RAN.

For example, the TSN AF determines expected time information, which may be referred to as expected time information 1, for the first QoS flow. The TSN AF may send the expected time information 1 to the PCF. For example, the TSN AF may send a TSC assistance container 1 to the PCF. The TSC assistance container 1 may include update information of a first service flow. The update information of the first service flow may include the expected time information 1. For other content included in the TSC assistance container 1, refer to S502 in the embodiment shown in FIG. 5. The PCF may send a PCC rule 1 to the SMF, where the PCC rule 1 may include the TSC assistance container 1. The SMF may determine expected assistance information, for example, referred to as expected assistance information 7, of the first QoS flow based on the TSC assistance container 1, where the expected assistance information 7 may indicate a transmission occasion of the first QoS flow. The SMF may send the expected assistance information 7 to the first RAN. In this way, this is equivalent to that the first RAN receives, from the TSN AF, information that needs to be negotiated. The first RAN may determine whether the expected assistance information 7 can be accepted. For example, if a resource scheduled based on time indicated by the expected assistance information 7 does not conflict with another resource, the first RAN can accept the expected assistance information 7; otherwise, the first RAN does not accept the expected assistance information 7.

If the first RAN accepts the expected assistance information 7, the first RAN may send acknowledgment information to the SMF, to indicate that the first RAN accepts the expected assistance information 7. The SMF may send the acknowledgment information to the TSN AF via the PCF. In this case, a negotiation process between the TSN AF and the first RAN is completed.

Alternatively, if the first RAN does not accept the expected assistance information 7, the first RAN may send negative acknowledgment information to the SMF, to indicate that the first RAN does not accept the expected assistance information 7. The SMF may send the negative acknowledgment information to the TSN AF via the PCF. After receiving the negative acknowledgment information, the TSN AF may re-determine expected time information for the first QoS flow, and then negotiate with the first RAN by using the foregoing procedure, until the acknowledgment information is received from the first RAN, or until an upper limit of negotiation duration is reached.

Alternatively, if the first RAN does not accept the expected assistance information 7, the first RAN may determine expected assistance information, for example, referred to as expected assistance information 8, for the first QoS flow. For example, the first RAN may determine a resource that does not conflict with another resource, and determine the expected assistance information 8 based on a time domain location of the resource. The first RAN may send the expected assistance information 8 to the SMF. The SMF may determine expected time information, for example, referred to as expected time information 2, based on the expected assistance information 8. The SMF sends the expected time information 2 to the TSN AF. The TSN AF may determine whether to accept the expected time information 2. For example, if time indicated by the expected time information 2 matches time indicated by current expected time information of the second QoS flow, the TSN AF may accept the expected time information 2; otherwise, the TSN AF does not accept the expected time information 2. If the TSN AF accepts the expected time information 2, the TSN AF may send acknowledgment information, to indicate that the TSN AF accepts the expected time information 2. The acknowledgment information may arrive at the first RAN by passing through a network element such as the SMF, and a negotiation process between the first RAN and the TSN AF ends.

Alternatively, if the TSN AF does not accept the expected time information 2, the TSN AF may send, to the first RAN, negative acknowledgment information or new expected time information that is of the first QoS flow and that is recognized by the TSN AF, to continue to negotiate with the first RAN, until the acknowledgment information is received from the first RAN, or until an upper limit of negotiation duration is reached.

In the foregoing negotiation process, for a QoS flow, the TSN AF sends one piece of expected time information to the RAN, where the expected time information may indicate an expected transmission occasion of the QoS flow. Alternatively, in another case, for a QoS flow, the TSN AF may send a plurality of pieces of expected time information to the RAN, where the plurality of pieces of expected time information may indicate a plurality of expected transmission occasions of the QoS flow. The RAN may select one expected transmission occasion from the plurality of expected transmission occasions. For example, the TSN AF sends expected time information a and expected time information b to the first RAN, where both the expected time information a and the expected time information b indicate transmission occasions of the first QoS flow, and the transmission occasions indicated by the two pieces of expected assistance information are different. The first RAN actually receives expected assistance information, for example, expected assistance information i and expected assistance information j. The first RAN may determine whether to accept the expected assistance information i. For a determining manner, refer to the foregoing descriptions. If the expected assistance information i is accepted, the expected assistance information j may not need to be processed; or if the expected assistance information i is not accepted, the first RAN may further determine whether to accept the expected assistance information j.

If the first RAN accepts the expected assistance information i or the expected assistance information j, the first RAN may send acknowledgment information to the TSN AF, to acknowledge that the first RAN accepts the expected assistance information i or the expected assistance information j. The negotiation process ends. However, if the first RAN does not accept the expected assistance information i or the expected assistance information j, the first RAN may send, to the TSN AF, negative acknowledgment information or expected assistance information recommended by the first RAN for the first QoS flow, to continue the negotiation process. For this, refer to the foregoing descriptions. The recommended expected assistance information that is for the first QoS flow and that is sent by the first RAN may include one or more pieces of expected assistance information, and the TSN AF may separately process the plurality of pieces of expected assistance information. It should be noted that an information exchange process between the first RAN and the TSN AF also needs to be processed by intermediate network elements such as the SMF and the PCF. Details are not described in this example.

Alternatively, in a negotiation process, for a QoS flow, the RAN may send a plurality of pieces of expected assistance information to the TSN AF, where the plurality of pieces of expected assistance information may indicate a plurality of expected transmission occasions of the QoS flow. The TSN AF may select one expected transmission occasion from the plurality of expected transmission occasions. In other words, in S807, the first RAN may send one or more pieces of expected assistance information to the SMF, where the first expected assistance information is one of the one or more pieces of expected assistance information. Correspondingly, in S808, the SMF may determine one or more pieces of expected time information corresponding to the first QoS flow. In S809, the SMF may send, to the TSN AF, the one or more pieces of expected time information corresponding to the first QoS flow. In S807, the second RAN may send one or more pieces of expected assistance information to the SMF, where the second expected assistance information is one of the one or more pieces of expected assistance information. Correspondingly, in S808, the SMF may determine one or more pieces of expected time information corresponding to the second QoS flow. In S809, the SMF may send, to the TSN AF, the one or more pieces of expected time information corresponding to the second QoS flow. For example, the first RAN sends expected assistance information k and expected assistance information m to the TSN AF, where the expected assistance information k is, for example, the first expected assistance information, both the expected assistance information k and the expected assistance information m indicate transmission occasions of the first QoS flow, and the transmission occasions indicated by the two pieces of expected assistance information are different. The TSN AF actually receives expected time information, for example, expected time information c and expected time information d. The expected time information c is, for example, the first expected time information. The TSN AF may determine whether to accept the expected time information c. If the TSN AF receives a plurality of pieces of expected time information corresponding to the second QoS flow, the TSN AF may determine, based on the plurality of pieces of expected time information, whether to accept expected time information i. The TSN AF determines to accept the expected time information i, provided that it is determined, based on any one of the plurality of pieces of expected time information, that the expected time information i can be accepted. The TSN AF determines, based on a piece of expected time information corresponding to the second QoS flow, whether expected time information g can be accepted. For a determining manner, refer to the foregoing descriptions (for example, if a transmission occasion indicated by the expected time information corresponding to the second QoS flow is the same as a transmission occasion indicated by the expected time information g, the SMF may accept the expected time information g). If the TSN AF accepts the expected time information c, the expected time information d may not need to be processed; or if the TSN AF does not accept the expected time information c, the TSN AF may further determine, in a similar manner, whether to accept the expected time information d.

If the TSN AF accepts the expected time information c or the expected time information d, the TSN AF may send acknowledgment information to the first RAN, to acknowledge that the TSN AF accepts the expected time information c or the expected time information d. The negotiation process ends. However, if the TSN AF does not accept the expected time information c or the expected time information d, the TSN AF may send, to the first RAN, negative acknowledgment information or expected time information recommended by the TSN AF for the first QoS flow, to continue the negotiation process. For this, refer to the foregoing descriptions. The recommended expected assistance information that is for the first QoS flow and that is sent by the TSN AF may include one or more pieces of expected assistance information, and the first RAN may separately process the plurality of pieces of expected assistance information. It should be noted that an information exchange process between the first RAN and the TSN AF also needs to be processed by intermediate network elements such as the SMF and the PCF. Details are not described in this example. In S810, negotiation processes between the TSN AF and the two RANs are similar, and the negotiation process between the TSN AF and the second RAN is not described again.

In this embodiment of this application, for example, the expected time information of the first QoS flow finally determined by the TSN AF and the first RAN through negotiation is referred to as third expected time information, and the expected time information of the second QoS flow finally determined by the TSN AF and the second RAN through negotiation is referred to as fourth expected time information.

S811: The TSN AF sends fifth expected time information to a CNC. Correspondingly, the CNC receives the fifth expected time information from the TSN AF. The TSN AF may determine the fifth expected time information based on the third expected time information and the fourth expected time information.

For more content of S811, refer to S510 in the embodiment shown in FIG. 5.

S812: The CNC sends first time information and second time information to the TSN AF. Correspondingly, the TSN AF receives the first time information and the second time information from the CNC.

For more content of S812, refer to S511 in the embodiment shown in FIG. 5.

S813: The TSN AF sends second information to the PCF. Correspondingly, the PCF receives the second information from the TSN AF.

For more content of S813, refer to S512 in the embodiment shown in FIG. 5.

S814: The PCF sends a third PCC rule and a fourth PCC rule to the SMF. Correspondingly, the SMF receives the third PCC rule and the fourth PCC rule from the PCF.

For more content of S814, refer to S513 in the embodiment shown in FIG. 5.

S815: The SMF sends assistance information 3 to the first RAN. Correspondingly, the first RAN receives the assistance information 3 from the SMF. In addition, the SMF sends assistance information 4 to the second RAN. Correspondingly, the second RAN receives the assistance information 4 from the SMF.

For more content of S815, refer to S514 in the embodiment shown in FIG. 5.

In this embodiment of this application, an example in which the first QoS flow and the second QoS flow correspond to a same SMF is used. Alternatively, the first QoS flow and the second QoS flow may correspond to different SMFs, or a first PDU session and a second PDU session are served by different SMFs. In this case, for example, an SMF corresponding to the first QoS flow is referred to as a first SMF, and an SMF corresponding to the second QoS flow is referred to as a second SMF. In S803, the PCF sends the first PCC rule to the first SMF, and sends the second PCC rule to the second SMF. In S804, the first SMF determines the assistance information 1, and the second SMF determines the assistance information 2. In S805, the first SMF sends the assistance information 1 to the first RAN, and the second SMF sends the assistance information 2 to the second RAN. In S807, the first RAN sends the first expected assistance information to the first SMF, and the second RAN sends the second expected assistance information to the second SMF. In S808, the first SMF determines the first expected time information based on the first expected assistance information, and the second SMF determines the first expected time information based on the first expected assistance information. In S809, the first SMF sends the first expected time information to the TSN AF, and the second SMF sends the second expected time information to the TSN AF. In S814, the PCF sends the third PCC rule to the first SMF, and sends the fourth PCC rule to the second SMF (where optionally, PCFs serving two UEs may be different, and details are not described herein). In S815, the first SMF determines the assistance information 3, and the second SMF determines the assistance information 4. In S816, the first SMF sends the assistance information 3 to the first RAN, and the second SMF sends the assistance information 4 to the second RAN. In addition, in the negotiation process described in S810, negotiation content involving the first QoS flow is processed by the first SMF, and negotiation content involving the second QoS flow is processed by the second SMF.

In this embodiment of this application, an association relationship between two QoS flows is considered when the assistance information 3 and the assistance information 4 are determined. Therefore, scheduling resources determined based on the two pieces of assistance information can meet time at which the two QoS flows arrive at an ingress of the RAN or egresses of the UEs. In addition, a fifth scheduling resource determined based on first assistance information does not conflict with another scheduling resource, and a sixth scheduling resource determined based on second assistance information does not conflict with the another scheduling resource. Therefore, normal transmission of the first QoS flow and the second QoS flow can be ensured. When two RANs transmit two QoS flows, in this embodiment of this application, negotiation between the TSN AF and the RANs can be implemented, thereby helping determine expected assistance information that can be recognized by both the two RANs. In addition, in a negotiation process between the TSN AF and the RAN, the TSN AF, as a core network device, may be dominant to some extent, or may be decision-making to some extent. The RAN may be more inclined to accept the expected assistance information recommended by the TSN AF. This helps shorten the negotiation process and improve service transmission efficiency.

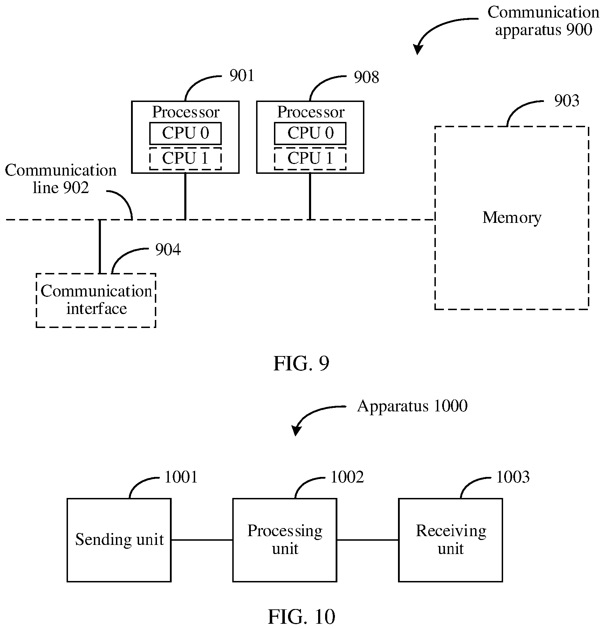

FIG. 9 is a diagram of a structure of a communication apparatus according to an embodiment of this application. The communication apparatus 900 may be the first access network device in any one of the embodiment shown in FIG. 5 to the embodiment shown in FIG. 8 or a circuit system of the first access network device, and is configured to implement the method corresponding to the first access network device in the foregoing method embodiment. Alternatively, the communication apparatus 900 may be the first core network device in the embodiment shown in FIG. 5 to the embodiment shown in FIG. 8 or a circuit system of the first core network device, and is configured to implement the method corresponding to the first core network device in the foregoing method embodiment. Alternatively, the communication apparatus 900 may be the second core network device in the embodiment shown in FIG. 5 to the embodiment shown in FIG. 8 or a circuit system of the second core network device, and is configured to implement the method corresponding to the second core network device in the foregoing method embodiment. For a specific function, refer to the descriptions in the foregoing method embodiments. For example, the circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located in different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to send information to another apparatus or receive information from the another apparatus. The transceiver may be referred to as a transceiver, a transceiver circuit, an input/output interface, or the like, and is configured to implement a transceiver function of the communication apparatus 900 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 901 may include a general-purpose central processing unit (central processing unit, CPU), a microprocessor, an application-specific integrated circuit (application-specific integrated circuit, ASIC), or one or more integrated circuits for controlling program execution for the solutions of this application.

The communication line 902 may include a path through which information is transmitted between the foregoing components.

The communication interface 904 uses any transceiver-type apparatus, to communicate with another device or a communication network such as the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the computer-executable instructions are executed under control of the processor 901. The processor 901 is configured to execute the computer-executable instructions stored in the memory 903, to implement the communication methods provided in the foregoing embodiments of this application.

Optionally, the computer-executable instructions in this embodiment of this application may also be referred to as application program code. This is not specifically limited in this embodiment of this application.

During specific implementation, in an embodiment, the processor 901 may include one or more CPUs such as a CPU 0 and a CPU 1 in FIG. 9.

During specific implementation, in an embodiment, the communication apparatus 900 may include a plurality of processors, for example, the processor 901 and a processor 908 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first access network device, a chip of the first core network device, or a chip of the second core network device, the chip includes a processor 901 (may further include a processor 908), a communication line 902, a memory 903, and a communication interface 904. Specifically, the communication interface 904 may be an input interface, a pin, a circuit, or the like. The memory 903 may be a register, a cache, or the like. The processor 901 and the processor 908 may each be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. For example, when each functional module is obtained through division based on each corresponding function, FIG. 10 is a diagram of an apparatus. The apparatus 1000 may be the first access network device, the first core network device, or the second core network device in the foregoing method embodiments, or may be a chip in the first access network device, a chip in the first core network device, or a chip in the second core network device. The apparatus 1000 includes a sending unit 1001, a processing unit 1002, and a receiving unit 1003.

It should be understood that the apparatus 1000 may be configured to implement the steps performed by the first access network device, the first core network device, or the second core network device in the methods in embodiments of this application. For related features, refer to the foregoing embodiments. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may be further implemented by using a pin, a circuit, or the like.

This application further provides a computer-readable storage medium. The computer-readable storage medium stores a computer program or instructions. When the computer program or the instructions are run, the method performed by the first access network device, the first core network device, or the second core network device in the foregoing method embodiment is implemented. In this way, the function in the foregoing embodiments may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first access network device, the first core network device, or the second core network device in any one of the foregoing method embodiments.

An embodiment of this application further provides a processing apparatus, including a processor and an interface. The processor is configured to perform the method performed by the first access network device, the first core network device, or the second core network device in any one of the foregoing method embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or a storage medium in any other format in this field. For example, the storage medium may be connected to the processor, so that the processor can read information from the storage medium and write information into the storage medium. Optionally, the storage medium may be further integrated into the processor. The processor and the storage media may be disposed in an ASIC, and the ASIC may be disposed in a terminal device. Optionally, the processor and the storage medium may alternatively be disposed in different components in the terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. It is clear that a person skilled in the art can make various modifications and variations to embodiments of this application without departing from the scope of embodiments of this application. In this way, embodiments of this application are also intended to cover these modifications and variations to embodiments of this application provided that they fall within the scope of the claims of embodiments of this application and equivalent technologies thereof.

## Claims

1. A communication method, applied to a first access network device, wherein the method comprises:
determining first expected assistance information and second expected assistance information based on matching information between a first QoS flow and a second QoS flow, wherein the first expected assistance information indicates an expected transmission occasion of the first QoS flow, the second expected assistance information indicates an expected transmission occasion of the second QoS flow, and the matching information indicates that the first QoS flow matches the second QoS flow, or indicates that the first QoS flow and the second QoS flow are used to transmit a same service flow; and
sending the first expected assistance information and the second expected assistance information to a first core network device, wherein the first expected assistance information and the second expected assistance information are used to re-determine transmission occasions of the first QoS flow and the second QoS flow.

2. The method according to claim 1, wherein the determining first expected assistance information comprises:
when a first scheduling resource determined based on an estimated transmission occasion of the first QoS flow conflicts with another scheduling resource,
determining the first expected assistance information based on a time domain location of a second scheduling resource, wherein the second scheduling resource does not conflict with the another scheduling resource.

3. The method according to claim 1 or 2, wherein the determining first expected assistance information and second expected assistance information based on matching information between a first QoS flow and a second QoS flow comprises:
if the transmission occasion of the first QoS flow indicated by the first expected assistance information has a first offset relative to the estimated transmission occasion of the first QoS flow, the transmission occasion of the second QoS flow indicated by the second expected assistance information has the first offset relative to an estimated transmission occasion of the second QoS flow.

4. The method according to any one of claims 1 to 3, wherein the method further comprises:
receiving the matching information from the first core network device.

5. The method according to any one of claims 1 to 4, wherein
the matching information comprises access network tunnel information corresponding to a first PDU session and an identifier of the first QoS flow, and comprises access network tunnel information corresponding to a second PDU session and an identifier of the second QoS flow;
the matching information comprises core network tunnel information corresponding to a first PDU session and an identifier of the first QoS flow, and comprises core network tunnel information corresponding to a second PDU session and an identifier of the second QoS flow; or
the matching information comprises an identifier of a first PDU session and an identifier of the first QoS flow, and comprises an identifier of a second PDU session and an identifier of the second QoS flow, wherein
the first PDU session is a session in which the first QoS flow is located, and the second PDU session is a session in which the second QoS flow is located.

6. The method according to any one of claims 1 to 5, wherein after the sending the first expected assistance information and the second expected assistance information to a first core network device, the method further comprises:
receiving first assistance information and second assistance information from the first core network device, wherein the first assistance information indicates the transmission occasion of the first QoS flow, the second assistance information indicates the transmission occasion of the second QoS flow, a scheduling resource determined based on the first assistance information does not conflict with another scheduling resource, and scheduling determined based on the second assistance information does not conflict with the another scheduling resource.

7. The method according to any one of claims 1 to 6, wherein
the first expected assistance information comprises expected burst arrival time of the first QoS flow;
the first expected assistance information comprises range information of expected burst arrival time of the first QoS flow;
the first expected assistance information comprises an offset of expected burst arrival time of the first QoS flow; or
the first expected assistance information comprises range information of an offset of expected burst arrival time of the first QoS flow, wherein
the offset of the expected burst arrival time of the first QoS flow is an offset between the expected burst arrival time of the first QoS flow and estimated burst arrival time of the first QoS flow.

8. A communication method, applied to a first core network device, wherein the method comprises:
receiving first expected assistance information and second expected assistance information, wherein the first expected assistance information indicates an expected transmission occasion of a first QoS flow, the second expected assistance information indicates an expected transmission occasion of a second QoS flow, and the first QoS flow and the second QoS flow are used to transmit a same service flow;
determining first expected time information and second expected time information based on third expected assistance information and fourth expected assistance information, wherein the first expected time information indicates an expected transmission occasion of a first service flow, the second expected time information indicates an expected transmission occasion of a second service flow, the third expected assistance information is associated with at least one of the first expected assistance information and the second expected assistance information, the fourth expected assistance information is associated with at least one of the first expected assistance information and the second expected assistance information, the first service flow is transmitted by using the first QoS flow, and the second service flow is transmitted by using the second QoS flow; and
sending the first expected time information and the second expected time information to a second core network device, to re-determine transmission occasions of the first service flow and the second service flow.

9. The method according to claim 8, wherein
the third expected assistance information is the first expected assistance information, and the fourth expected assistance information is the second expected assistance information.

10. The method according to claim 8 or 9, wherein the method further comprises:
sending matching information to a first access network device, wherein the first access network device is configured to transmit the first QoS flow and the second QoS flow, and the matching information indicates that the first QoS flow matches the second QoS flow, or indicates that the first QoS flow and the second QoS flow are used to transmit the same service flow.

11. The method according to claim 8, wherein the method further comprises:
if time indicated by the first expected assistance information does not match time indicated by the second expected assistance information, determining the third expected assistance information and the fourth expected assistance information based on the first expected assistance information and the second expected assistance information, wherein transmission occasions indicated by the third expected assistance information and the fourth expected assistance information have a same offset relative to estimated transmission occasions of corresponding QoS flows.

12. The method according to claim 11, wherein the method further comprises:
sending the third expected assistance information to a first access network device, and sending the fourth expected assistance information to a second access network device, wherein the third expected assistance information indicates an expected transmission occasion of the first QoS flow, and the fourth expected assistance information indicates an expected transmission occasion of the second QoS flow; and
receiving first acknowledgment information from the first access network device, and receiving second acknowledgment information from the second access network device, wherein the first acknowledgment information indicates that the third expected assistance information is accepted, and the second acknowledgment information indicates that the fourth expected assistance information is accepted.

13. The method according to any one of claims 8, 9, 11, and 12, wherein the method further comprises:
sending information about the second QoS flow to the first access network device, and sending information about the first QoS flow to the second access network device.

14. The method according to any one of claims 8 to 13, wherein the method further comprises:
determining the matching information between the first QoS flow and the second QoS flow, wherein the matching information indicates that the first QoS flow matches the second QoS flow, or indicates that the first QoS flow and the second QoS flow are used to transmit the same service flow.

15. The method according to claim 14, wherein the method further comprises:
receiving association information from the second core network device, wherein the association information indicates that a first terminal device is associated with a second terminal device, the matching information is determined based on the association information, the first terminal device corresponds to the first service flow, and the second terminal device corresponds to the second service flow.

16. The method according to claim 15, wherein
the association information comprises information about an association relationship between an identifier of the first terminal device and an identifier of the second terminal device; or
the association information comprises information about an association relationship between the first service flow and the second service flow.

17. The method according to any one of claims 14 to 16, wherein
the matching information comprises access network tunnel information corresponding to a first PDU session and an identifier of the first QoS flow, and comprises access network tunnel information corresponding to a second PDU session and an identifier of the second QoS flow;
the matching information comprises core network tunnel information corresponding to a first PDU session and an identifier of the first QoS flow, and comprises core network tunnel information corresponding to a second PDU session and an identifier of the second QoS flow; or
the matching information comprises an identifier of a first PDU session and an identifier of the first QoS flow, and comprises an identifier of a second PDU session and an identifier of the second QoS flow, wherein
the first PDU session is a session in which the first QoS flow is located, and the second PDU session is a session in which the second QoS flow is located.

18. The method according to any one of claims 8 to 17, wherein
the first expected assistance information comprises expected burst arrival time of the first QoS flow;
the first expected assistance information comprises range information of expected burst arrival time of the first QoS flow;
the first expected assistance information comprises an offset of expected burst arrival time of the first QoS flow; or
the first expected assistance information comprises range information of an offset of expected burst arrival time of the first QoS flow, wherein
the offset of the expected burst arrival time of the first QoS flow is an offset between the expected burst arrival time of the first QoS flow and estimated burst arrival time of the first QoS flow.

19. A communication apparatus, configured to implement the method according to any one of claims 1 to 7, or configured to implement the method according to any one of claims 8 to 18.

20. A communication apparatus, comprising a processor and a memory, wherein the memory is coupled to the processor, and the processor is configured to perform the method according to any one of claims 1 to 7, or configured to perform the method according to any one of claims 8 to 18.

21. A computer-readable storage medium, wherein the computer-readable storage medium is configured to store a computer program, and when the computer program runs on a computer, the computer is enabled to perform the method according to any one of claims 1 to 7, or the computer is enabled to perform the method according to any one of claims 8 to 18.

22. A chip system, wherein the chip system comprises:
a processor and an interface, wherein the processor is configured to: invoke instructions from the interface and run the instructions, and when executing the instructions, the processor implements the method according to any one of claims 1 to 7, or implements the method according to any one of claims 8 to 18.

23. A computer program product, wherein the computer program product comprises a computer program, and when the computer program runs on a computer, the computer is enabled to perform the method according to any one of claims 1 to 7, or the computer is enabled to perform the method according to any one of claims 8 to 18.
